# EUROPEAN PATENT SPECIFICATION

(11) **EP 1 495 623 B1**
(45) Date of publication and mention of the grant of the patent: **30.06.2010**
(21) Application number: 03746384.1
(22) Date of filing: 11.04.2003
(51) Int. Cl.: H04L 29/08, H04L 1/18

(54) **SYSTEM, DEVICE AND METHOD FOR IMPROVING THROUGHPUT IN A COMMUNICATION NETWORK, PREFERABLY A MOBILE IPV6-BASED NETWORK**
SYSTEM, EINRICHTUNG UND VERFAHREN ZUR VERBESSERUNG DES DURCHSATZES IN EINEM KOMMUNIKATIONSNETZ, VORZUGSWEISE EINEM AUF IPV6 BASIERENDEN MOBILNETZWERKS
SYSTEME, DISPOSITIF ET PROCEDE POUR AMELIORER LE DEBIT DANS UN RESEAU DE COMMUNICATION, DE PREFERENCE UN RESEAU MOBILE DE TYPE IPV6

(30) Priority: 12.04.2002 WO PCT/IB02/01181
(43) Date of publication of application: 12.01.2005
(73) Proprietor: Nokia Corporation, 02150 Espoo (FI)
(72) Inventor: ZHANG, Dongmei, Haidian District, Beijing (CN); ZHANG, Runtong, c/o NOKIA CORPORATION, FIN-02150 Espoo (FI); KAN, Zhigang, c/o NOKIA CORPORATION, FIN-02150 Espoo (FI); MA, Jian, c/o NOKIA CORPORATION, FIN-02150 Espoo (FI)
(74) Representative: TBK-Patent
(86) International application number: PCT/IB2003/001342
(87) International publication number: WO 2003/088622

(56) References cited:
- EP-A- 0 991 244
- WO-A-01/97438
- CACERES R ET AL: "Improving the performance of reliable transport protocols in mobile computing environments" IEEE JOURNAL ON SELECTED AREAS IN COMMUNICATIONS, JUNE 1995, USA, vol. 13, no. 5, pages 850-857, XP002248963 ISSN: 0733-8716
- GOFF T ET AL: "Freeze-TCP: a true end-to-end TCP enhancement mechanism for mobile environments" PROCEEDINGS IEEE INFOCOM 2000. CONFERENCE ON COMPUTER COMMUNICATIONS. NINETEENTH ANNUAL JOINT CONFERENCE OF THE IEEE COMPUTER AND COMMUNICATIONS SOCIETIES (CAT. NO.00CH37064), PROCEEDINGS IEEE INFOCOM 2000. CONFERENCE ON COMPUTER COMMUNICATIONS. NINE, pages 1537-1545 vol.3, XP002248964 2000, Piscataway, NJ, USA, IEEE, USA ISBN: 0-7803-5880-5
- LIN D ET AL: "TCP fast recovery strategies: analysis and improvements" PROCEEDINGS. IEEE INFOCOM '98, THE CONFERENCE ON COMPUTER COMMUNICATIONS. SEVENTEENTH ANNUAL JOINT CONFERENCE OF THE IEEE COMPUTER AND COMMUNICATIONS SOCIETIES. GATEWAY TO THE 21ST CENTURY (CAT. NO.98CH36169), PROCEEDINGS IEEE INFOCOM'98 CONFERENCE O, pages 263-271 vol.1, XP002248965 1998, New York, NY, USA, IEEE, USA ISBN: 0-7803-4383-2
- MISRA A ET AL: "The window distribution of idealized TCP congestion avoidance with variable packet loss" IEEE INFOCOM '99. CONFERENCE ON COMPUTER COMMUNICATIONS. PROCEEDINGS. EIGHTEENTH ANNUAL JOINT CONFERENCE OF THE IEEE COMPUTER AND COMMUNICATIONS SOCIETIES. THE FUTURE IS NOW (CAT. NO.99CH36320), PROCEEDINGS OF INFOCOM'99: CONFERENCE ON COMPUTER COMMU, pages 1564-1572 vol.3, XP002248966 1999, Piscataway, NJ, USA, IEEE, USA ISBN: 0-7803-5417-6

## Description

The invention relates to a method and system for improving throughput in a communication network, preferably a Mobile IPv6-based network. IPv6 stands for the Internet Protocol version 6 (as compared to the existing IPv4) and is a standardized protocol. Mobile IPv6 is a standardized protocol which supports mobility in IPv6.

In particular, the present invention is related to a method and system to improve TCP (Transmission Control Protocol) performance, especially the throughput of TCP connection and utilization of the network resource, when a mobile node in the Mobile IPv6 network hands over between two subnets.

TCP (Transmission Control Protocol) is a reliable transport protocol that has been tuned for networks composed of wired links and stationary hosts. It interprets an unexpected increase in delay as packet losses caused by congestion.The congestion control policies are beneficial in improving the overall performance of the networks like the Internet.

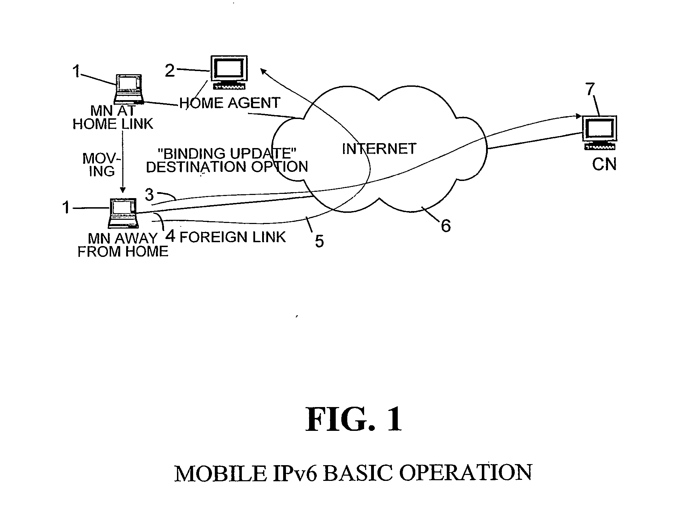

Mobile IPv6 networks, however, include wireless links and mobile hosts. In Mobile IPv6, a mobile node (MN) is always addressable by its home address, whether it is currently attached to its home link or is away from home. While a mobile node is attached to some foreign link away from home, it is also addressable by one or more care-of addresses, in addition to its home address. A correspondent node (CN) is any node communicating with the mobile node. After the mobile node acquires its care-of address in a foreign link, it will register the association between the mobile node's home address and this care-of address with home agent and correspondent node by sending a packet containing a "Binding Update" destination option, as shown in Fig. 1.

When TCP is used as the transport protocol, some types of delay and packet loss that are unrelated to congestion will be encountered during mobile node handing over between two subnets.

The problem with existing TCP is that the packets lost during handoff are interpreted as network congestion. In more detail, the typical congestion control mechanisms will misinterpret unexpected increase in delay as packet losses caused by congestion, and may degrade the network performance because the congestion state is followed automatically by the TCP slow start procedure.

In Mobile IPv6, there are several types of delay and loss that are unrelated to congestion. First, communications may slow down while the handovers between two subnets occur, packets cannot again be routed to and from the mobile node until the handover completes. During the handover process, there is a time period when the MN is unable to send or receive IPv6 packets both due to link switching delay and IP protocol operations. This time period is referred to as handover latency. In many instances, the handover latency resulting from standard Mobile IPv6 handover procedures could be greater than what is acceptable to support real-time or delay sensitive traffic.

Second, packets may be lost due to the relatively frequent transmission errors suffered by wireless link. Third, packets may be lost due to the limited buffer in home agent buffering packets when a mobile node is attached to some foreign link away from home.

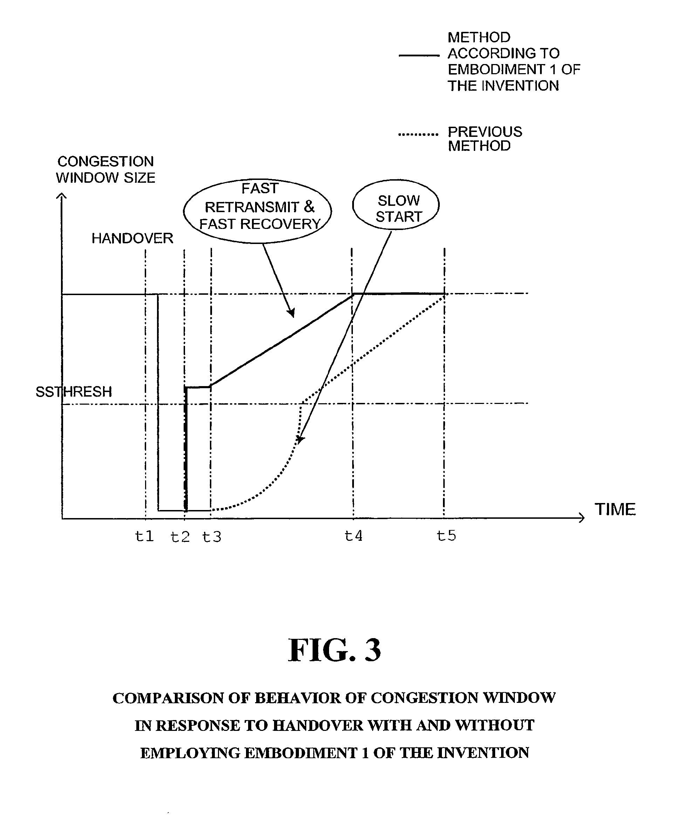

When these unexpected delays due to handover occur, the typical TCP congestion control will interpret them as network congestion. Therefore, the congestion window shrinks to its minimum value (one segment) abruptly and begins to invoke the slow-start algorithm till an acknowledgment (ACK) reaches TCP transmitter. As ACK reach the TCP transmitter, slow-start algorithm begins to grow the congestion window exponentially until it reaches a threshold ssthresh, then grows it linearly. The threshold ssthresh is set to one half of the congestion window size at the time of the retransmission timeout. After handover completes for long time, the congestion window returns gradually to its previous level before the shrinking of the window, as shown in Fig 3 by broken lines. Thus it takes a long time after handover completion until the congestion window returns gradually to its previous level.

Actually, the slow start algorithm is effective when network congestions are indeed detected. However in the handover scenario, slow start usually is not triggered by network congestions, but by handovers. Hence, the slow recovery of the congestion window due to slow start algorithm after each handover causes loss of throughput.

In Mobile IPv6, a handover of a mobile node between two subnets will degrade TCP performance, especially throughput and utilization of network resource.

Although a number of methods such as Fast Handover, G. Dommety (Editor), A. Yegin, C. Perkins, G. Tsirtsis, K. El-Malki, M. Khalil: "Fast Handovers for Mobile IPv6", Internet Draft, Internet Engineering Task Force (IETF), September 2002, and LMM, Carl Williams, Editor: "Localized Mobility Management Requirements", Internet Draft, Internet Engineering Task Force, December 2002, have been proposed to improve the handover performance in Mobile IPv6, packet loss, reordered packets and delayed packets are produced due to handover process not to congestion. According to the TCP principle, TCP assume that packet losses are indications of congestion. However, sometimes losses are caused by corruption on a wireless link, and significantly reordered packets are not always indications of congestions. Hence, the typical congestion control mechanisms may degrade the network performance. Thus, in Mobile IPv6, a MN handover between two subnets will degrade TCP performance, especially throughput and the utilization of network resource.

Because of the key roles of TCP in the Internet, various attempts have been made to enhance TCP functions. Recently, along with the rapidly development of satellite or mobile technologies, improving TCP's performance on wireless links has been becoming a challenge and an active research topic.

In wired link scenarios, there are many TCP enhancement methods, which are well applied. Among all the amendments to TCP, slow start, congestion avoidance, fast retransmission and fast recovery are efficient and mature, and well applied. Another example is the Explicit Congestion Notification (ECN). Fast-TCP has recently proposed, and its control philosophy is different from all previous methods. However, some problems still exist when these methods are used in wireless environment.

Regarding the TCP enhancements on the wireless platform, considerable efforts are devoted to determining the cause of packet drops and accordingly taking control actions. Generally, forward error correction (FEC), automatic repeat request (ARQ), indirect TCP (I-TCP), snoop, explicit loss notification (ELC), selective ACK (SACK), forward ACK (FACK), new ECN, and Full Rate (FR+) are some possible solutions in this category.

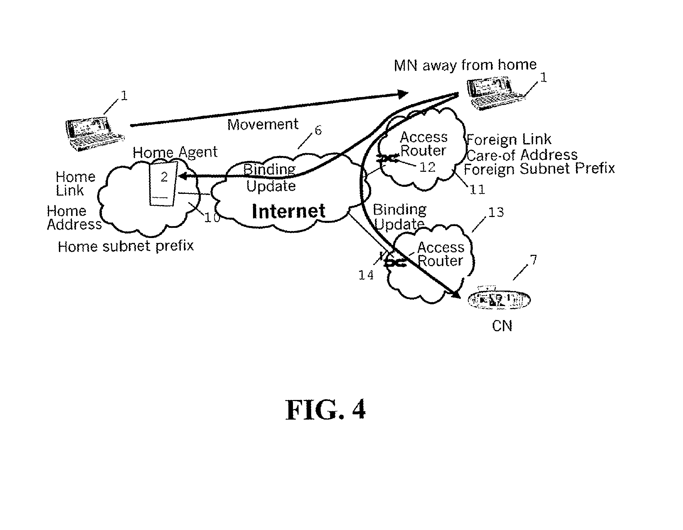

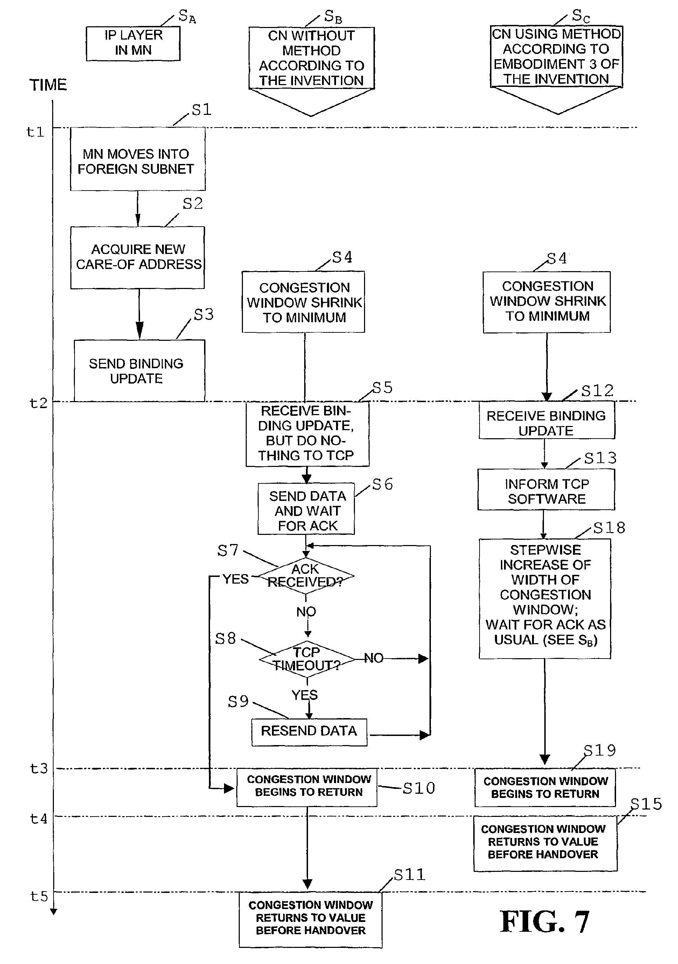

Caceres, "Improving the performance of reliable transport protocols in mobile computing environments", IEEE JOURNALS ON SELECTED AREAS IN COMMUNICATIONS; JUNE 1995, USA, vol. 13, no. 5, pages 850-857, employs a fast retransmission scheme. Fig. 4 shows the general behavior of TCP congestion windows without any compensation feature. Fig. 7 illustrates a fast retransmission scheme after a handoff with zero-second rendezvous delay. The fast retransmission approach follows established congestion avoidance policies by closing the transmission window and using the slow-start algorithm after the initial retransmission.

The invention aims, among others, to improve performance, e.g. to provide TCP enhancements for solving handover-related problems.

The present invention provides a method, system and/or device as defined in the independent claims or any one of the dependent claims.

The invention preferably relates to IPv6 mobility and TCP optimization methods "fast retransmit" and "fast recovery". In fast retransmit method lost packets are detected in TCP transmitter by means of three or more duplicate ACKs.

The invention further preferably relates to IPv6 handoff (or handover) between two subnets.

The invention provides a method and system for improving throughput in a communication network, preferably a Mobile IPv6-based network.

In accordance with one of the aspects of the invention, the invention relates to a case where e.g. CN is taken as the TCP transmitter and MN as the TCP receiver, or vice versa.

The invention provides a method for triggering the fast retransmit and fast recovery mechanism as fast as possible, by means of which the throughput of TCP connection and the utilization of the network resoure can be improved.

### BRIEF DESCRIPTION OF THE DRAWINGS

Fig. 1 illustrates an embodiment of the invention and illustrates the basic operation in Mobile Ipv6 handover and the process between Mobile Node (MN) and Correspondent Node (CN), for initializing a "Binding Update" destination option;
Fig. 2 shows a time scale for comparing flow charts of a first embodiment of a method and device in accordance with the invention, and of a method not using the first embodiment of the invention;
Fig. 3 shows a comparison of the behavior of a congestion window in response to handover with and without the first embodiment of the method and device in accordance with the invention;
Fig. 4 illustrates another embodiment of the invention, showing the basic operation in Mobile Ipv6 handover with more details and the process between Mobile Node (MN) and Correspondent Node (CN), for initializing a "Binding Update" destination option;
Fig. 5 shows a time scale for comparing flow charts of a second embodiment of a method and device in accordance with the invention, and of a method not using the second embodiment of the invention;
Fig. 6 shows a comparison of the behavior of a congestion window in response to handover with and without the second embodiment of the method and device in accordance with the invention;
Fig. 7 shows a time scale for comparing flow charts of a third embodiment of a method and device in accordance with the invention, and of a method not using the third embodiment of the invention; and
Fig. 8 shows a comparison of the behavior of a congestion window in response to handover with and without the third embodiment of the method and device in accordance with the invention.

### DETAILED DESCRIPTION OF PREFERRED EMBODIMENTS OF THE INVENTION

The invention can be implemented e.g. in a TCP sender with small modifications. TCP sender can be any mobile equipments, such as mobile phones, Personal Digital Assistants (PDAs), laptops, which have e.g. mobile IPv6 stack.

According to one of the aspects of the invention, when a mobile node after the handoff and e.g. address autoconfiguration in the new subnet sends a binding update message towards the correspondent node, the binding update is interpreted as a signal to a congestion control means, e.g. a TCP layer. The signal indicates to the congestion control means that fast recovery procedures should be initiated, instead of slow start. The signal can be implemented as duplicating ACK packets by the IP layer to the TCP layer. As an alternative, in order to provide the faster recovery rate after handover, a congestion window size may be step-wise increased after handover, or a threshold value defining a change from exponential to linear increase of the congestion window size, may be set to a value which is more than one half of the window size value before handover.

According to one of the embodiments, a method comprises the following steps:
1) When a mobile node moves from one subnet into another foreign subnet, it acquires its care-of address in foreign link, e.g. according to the methods of IPv6 Neighbor Discovery;
2) the mobile node registers the association between the mobile node's home address and this care-of address with home agent and correspondent node by sending a packet containing a "Binding Update" destination option;
3) when the correspondent node receives the packet containing the "Binding Update", the Mobile IPv6 software in the correspondent node signals the TCP software;
4) the TCP software on correspondent node invokes the fast retransmit and fast recovery mechanism or threshold value setting when it receives the signal from the Mobile IPv6 software.

According to embodiments, fast retransmit and fast recovery mechanism other than slow start mechanism can be invoked after handover completing, or a congestion window size can be increased step-wisely after handover, or a threshold value defining a change from exponential to linear increase of the congestion window size can be increased, so as to improve TCP performance, especially throughput. Fast retransmit and fast recovery algorithms are known TCP congestion control methods. The idea is that if three or more duplicate ACKs are received by a TCP transmitter, the missing segment will be retransmitted immediately, without waiting for the retransmission timer to expire. Then instead of performing slow-start algorithm, congestion avoidance algorithm is invoked. Invoking fast retransmit and fast recovery algorithms other than slow start will improve throughput of TCP connection.

Another advantage of the invention is that there is one trigger mechanism to invoke fast retransmit and fast recovery algorithms. In Mobile IPv6, fast retransmit and fast recovery algorithms could not be triggered automatically immediately after completion of handovers because ACKs could not be sent until the handover completed. The invention thus provides a trigger to fast retransmit and fast recovery algorithms.

A further advantage of the invention is the ability to trigger fast retransmit and fast recovery algorithms as soon as possible. In Mobile IPv6, after the mobile node acquires its care-of address in foreign link, it will register this care-of address with home agent and correspondent node by sending the "Binding Update" destination option. The "Binding Update" destination option is the earlist signal for the correspondent node to be informed that the handover is successful and will be completed soon. Hence, it is the earliest time for correspondent node to trigger fast retransmit and fast recovery algorithms.

There are key features, either to be provided isolated or in any arbitrary combination, of the present invention which improve earlier solutions: Invocation of fast retransmit and fast recovery mechanism other than slow start mechanism after handover completion; one trigger mechanism to invoke fast retransmit and fast recovery algorithms; triggering fast retransmit and fast recovery algorithms as fast as possible.

Some of the provided advantages are: Improvement of the TCP performance, e.g of TCP throughput; Improvement of the utilization of network resource; Only minor modifications to the TCP and Mobile IPv6 software in TCP transmitter are be made.

In the below described embodiments of the invention, a message, e.g. Binding Update, is used as a trigger to change the normal congestion control such as TCP congestion control. The subsequent congestion control changing processes after occurrence of the trigger can be different in the embodiments in accordance with the present invention. In a first embodiment, a conventional Fast Retransmit and Fast Recovery procedure is invoked after the trigger. Thus, a new trigger is provided for invoking this procedure at an earlier time.

In another embodiment, a Slow-Start Threshold (SSTHRESH) is increased after occurrence of the trigger. The new SSTHRESH can be any value between old SSTHRESH and old Congestion Window size (CWND). The actual value of the new SSTHRESH may depend on the network performance. In a network with good performance, a higher SSTHRESH can be set, and in a network with poor performance, a lower SSTHRESH may be set.

In a further embodiment, the Congestion Window size (CWND) can be increased after occurrence of the trigger. The value of new CWND can be any value from more than the minimum value (one segment) to old CWND. The new CWND may also depend on the network performance. Different values will result in different CWND behavior.

In other embodiments, the above measures can also be combined, that is the Slow-Start Threshold (SSTHRESH) and the Congestion Window size (CWND) can both be increased after occurrence of the trigger.

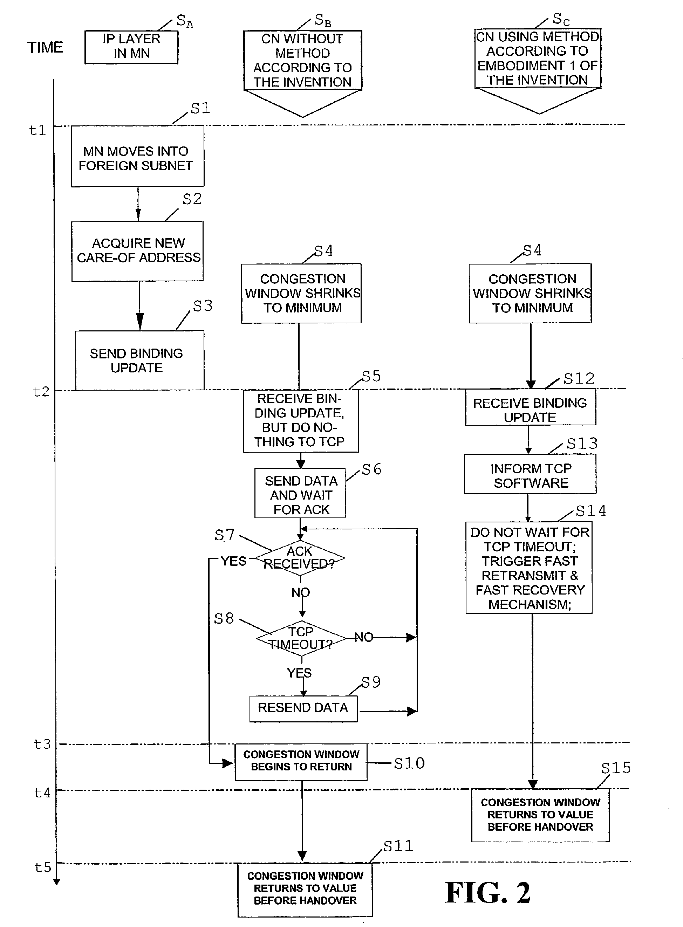

In all the embodiments, there are two different scenarios, i.e. MN acting as receiver and MN acting as transmitter (sender). In Figs. 2, 5 and 7, only the flow chart of the first scenario, that is MN acting as receiver and CN acting as transmitter, is presented. The flow charts for the second scenario (CN acting as receiver and MN acting as transmitter) are almost the same and are therefore not shown. The invention covers both scenarios.

Fig 1 illustrates a first embodiment of a communication system in accordance with the present invention and shows a MIP (Mobile IP, IP = Internet Protocol), e.g. mobile IPv6, basic operation during handover (Mobile IPv6 is the protocol that supports mobility in IPv6). A Mobile Node (MN) 1 is represented two times, once attached to its home link (upper position of Fig. 1), and once after moving to another location (lower position of Fig. 1) where the MN 1 is away from home and attached not to its home link but served by another serving entity, i.e. by a foreign link. A Home Agent (HA) 2 is associated to the MN for traffic control. With a Mobile IPv6 Binding Update (BU) message, a remote node such as the MN 1 after moving, may inform any other node such as the HA 2 or CN (Correspondent Node) 7 that all traffic sent to the remote node's home address should be currently sent to another address, the so called care-of-address.

The Mobile Node (MN) 1 detects its movement e.g. by receiving a Routing advertisement from a router, and generates its Care-of-Address (COA) with a stateless or a stateful address allocating procedure. MN 1 sends this information to its Home Agent (HA) 2 by a Binding Update (BU) message 5. HA 2 modifies the information on the address entry in its Binding Cache and e.g. returns a Binding Acknowledgement (BAck) message to MN 1. A same Binding Update message 3 is also sent from MN 1 to CN 7. This BU message 3 allows route optimization: The CN 7 sends the data directly to the MN 1 and vice versa.

Packets from a Correspondent Node (CN) 7 or any other node to the shadow of the Home Address of MN 1 are blocked by the HA 2 and are tunneled to the MN 1 for the destination in the Binding Cache. The connection and traffic between MN 1, HA 2, and CN 7, is effected via the internet 6. Link 4 represents any connection between MN 1 and any other node handled via internet 6.

Fig. 2 shows flow charts with a time scale for comparing the previous method and a first embodiment of the method/system according to the invention. The time axis is shown at the right-hand side of Fig. 2. The left column S_{A} represents the IP layer in the MN 1. The middle column S_{B} shows the normal previous behaviour of CN 7 when not employing the embodiment according to the invention.

The right-hand column S_{C} shows the behaviour of CN 7 when employing a first embodiment (embodiment 1) of the method and system according to the invention.

In Fig. 2, as well as in Figs. 3, and 5 to 8, the indicated time points t1 to t5 represent the following: t1: Handover begin; t2: Binding Update trigger; t3: Arrival of first ACK; t4: Congestion window size back to the value before handover in the embodiments of the present invention; t5: Congestion window size back to the value before handover in prior art.

In step S1 of Fig. 2, it is assumed that the MN 1 moves into a foreign subnet, that is a handover is performed. In step S2, the MN 1 acquires a new care-of address (CoA), and sends, in step S3, a message, preferably a binding update message, to HA 2 and/or CN 7.

In step S4 of the middle column S_{B} showing the normal previous behaviour of CN 7, and of the right column S_{C} showing the behaviour of CN 7 according to the first embodiment, the congestion window shrinks to the minimum value as a result of the handover. The size of the congestion window cwnd is set to 1 (cwnd=1).

In step S5 of the middle column S_{B} showing the normal previous behaviour of CN 7, CN 7 receives the Binding Update message either directly from MN 1, or from HA 2, but does nothing to TCP.

In step S6, it is assumed that the CN 7 sends data and waits for receipt of an Acknowledgment message ACK confirming that MN 1 has received the sent data.

If no ACK is received in step 7, the routine proceeds to step S8 in which TCP Timeout is checked as usual. Due to the handover, some packets will get lost so that the ACKs are not properly returned. As long as TCP has not timed out, the waiting loop is executed via steps S8, S7, for the set waiting period. After TCP timeout, the answer of checking step S8 is "Yes" and the program proceeds to step S9, in which the data are resent. Thereafter, the routine jumps back to step S7. This loop may be repeated for a defined number.

If an ACK is received in step 7, the routine proceeds to step S10 wherein the congestion window is controlled to increase, returning gradually to the previous value before handover. Thus, the customary slow start mechanism is effected.. In step S11, the congestion window has finally returned to the previous value before handover.

Now, the right-hand column S_{C} is discussed which shows the behaviour of CN 7 when employing the first embodiment of the method and system according to the invention. In step S12, the CN 7 receives the Binding Update message, and then informs its TCP software/structure thereon (step S13). The TCP software responds by executing step S14, i.e. it triggers its fast retransmit & fast recovery mechanism which may be the customary fast retransmit & fast recovery mechanism. Thus, the CN 7 does not wait for TCP timeout but immediately starts the fast retransmit/recovery mechanism for bringing back the congestion window to its value before the handover as quickly as possible.

As an example, according to one of the preferred embodiments, the value ssthresh may be increased or set to the previous value of the old congestion window in step S12.

In step S15, the congestion window has thus returned to the value before handover very fast.

Fig 3 shows a comparison of the behavior of the congestion window in response to handover with and without employing the above discussed first embodiment of the system and method according to the invention. The X axis of Fig. 3 represents time, and the Y axis represents the congestion window size and thus TCP throughput.

The solid line illustrates the behavior of the congestion window in response to handover when employing the first embodiment of the invention, i.e. when triggering the fast retransmit & fast recovery directly after handover detection, that is receipt of the message confirming handover completion such as the BU (Binding Update) message.

The dotted line of Fig. 3 shows the conventional behavior of the congestion window in response to handover when not using the invention, i.e when employing the slow start process.

As shown in Fig. 3, the first embodiment of the invention provides a very fast growth of the congestion window size and thus system performance and throughput, in a step-wise and subsequent ramp-like fashion, after any handover occurrence.

Contrary thereto, as shown by the dotted line in Fig. 3, the growth of the congestion window size as well as momentary window size, and thus system performance and throughput, is much slower with the conventional slow start technique after handover.

In this and the below described embodiments, when the binding updates to the correspondent node should be handled by an agent acting on behalf of the correspondent node, the agent is preferably programmed to send either the binding update messages, or a command for starting the fast retransmit & fast recovery, to the correspondent node, i.e. to the TCP transmitter.

According to another embodiment, the CN is adapted to check, when it receives a Binding Update message, whether it has sent any not yet acknowledged data, i.e. it is waiting for acknowledgment messages, or whether it has any data to be sent actually. When the CN does not have any unacknowledged data, i.e. it is not waiting for acknowledgment messages, or does presently not intend to send any data, the correspondent node may be programmed simply not to do anything special if it gets a Binding Update message. When the check should however reveal that the CN has sent any not yet acknowledged data, i.e. it is waiting for acknowledgment messages, or intends to send any data, the above mentioned fast retransmit & fast recovery method of the correspondent node is triggered.

The functioning of the method and system according to the invention can be tested by pretending to lose one or more packets, and checking the actions taken by the correspondent node when it gets a Binding Update message.

Buffer management (BM) might cause duplication of packets which can be dealt with in the MN, but wastes radio resources. An option is to agree between the MN and the CN upon the use of the disclosed method. This approach can bypass problems with BM and hierarchic mobility management.

The present invention thus provides a method and system for improving TCP performance, especially throughput and utilization of network resource.

In the following, some basic explanations on the algorithms mentioned above are given with reference to RFC 2001.

### Slow Start Algorithm:

The slow start algorithm adds another window to the sender's TCP: the congestion window "cwnd", so as to allow the rate of injecting new packets into the network to be the rate of returning acknowledgments by the other end.

When a new connection is established with a host on another network, the congestion window is initialized to one segment. Each time an ACK is received, the congestion window is increased by one segment. The sender can transmit packets up to the minimum of the congestion window and the advertised window. The congestion window provides flow control imposed by the sender, while the advertised window is a flow control imposed by the receiver. The sender flow control is based on the sender's assessment of perceived network congestion.

The sender starts by transmitting one segment and waiting for its ACK. When that ACK is received, the congestion window is incremented to two so that two segments can be sent. When each of those two segments is acknowledged, the congestion window is increased to four, providing approximately exponential growth. When the capacity of the network is reached, packets may be lost. This informs the sender that its congestion window has grown too large.

### Congestion Avoidance:

Congestion avoidance deals with lost packets. Congestion can e.g. occur when high data rate input streams arrive at a router with insufficient output capacity. A loss of a packet signals congestion somewhere in the network between the source and destination. There are two possible indications of packet loss: occurrence of timeout, or receipt of duplicate ACKs. When congestion occurs TCP slows down its transmission rate of packets into the network, and invokes the slow start algorithm.

Congestion avoidance and slow start require that two variables be maintained for each connection: a congestion window, cwnd, and a slow start threshold size. Slow start continues until TCP is halfway to where it was when congestion occurred, and then congestion avoidance takes over. Congestion avoidance dictates that cwnd be incremented each time an ACK is received, with linear growth of cwnd.

### Fast Retransmit:

The Fast Retransmit algorithm is a modification to the congestion avoidance algorithm. Note that TCP may generate an immediate acknowledgment (a duplicate ACK) when an out-of-order segment is received. This duplicate ACK should not be delayed. This duplicate ACK informs the other node that a segment was received out of order.

Since TCP does not know whether a duplicate ACK is caused by a lost segment or just a reordering of segments, it waits for a small number of duplicate ACKs to be received. If there is just a reordering of the segments, there will be only one or two duplicate ACKs before the reordered segment is processed, which will then generate a new ACK. If three or more duplicate ACKs are received in a row, this will normally be caused by having lost a segment during transmission. TCP then performs a retransmission of the missing unacknowledged segment, without waiting for a retransmission timer to expire.

### Fast Recovery

After fast retransmit has resent the missing segment, congestion avoidance (not slow start) is performed. This is the fast recovery algorithm. It is an improvement that allows high throughput under moderate congestion, especially for large windows.

The fast retransmit and fast recovery algorithms are usually implemented together as follows.
1. When the third duplicate ACK is received in succession, the slow start threshold size sst is set e.g. to one-half of the current congestion window, cwnd, and the missing segment is retransmitted. Then, cwnd is set to sst plus 3 times the segment size. This increases the congestion window by the number of segments received by the other end.
2. Each time another duplicate ACK arrives, cwnd is incremented by the segment size, so as to increase the congestion window each time an additional segment has left the network.
3. When a next ACK arrives that acknowledges new data, this ACK will normally be the acknowledgment of the retransmission performed in step 1. This ACK acknowledges all the intermediate segments sent between the lost packet and the receipt of the first duplicate ACK. The cwnd is then set to sst, e.g. to the value of sst set in step 1. This step provides congestion avoidance, since TCP is reduced to one-half of the rate before losing the packet.

Preferred embodiments of the invention relate to TCP performance enhancement during handovers in MIP such as Mobile IPv6 network. The embodiments propose a mechanism to undo an unnecessary congestion control triggered by reordered, delayed or lost packets due to handover.

The basic idea of some embodiments of the invention is to use a signal indicating handover completion, e.g. a binding update message, and then, recover the threshold ssthresh to a higher value than conventionally, e.g. to more than one-half of, up to the value of the previous congestion window, instead of only one half of this value. By this new higher ssthresh, the congestion window can be restored faster. Therefore, the TCP throughput and utilization of network resource are improved.

These or other embodiments of the invention basically belong to MIP focus area. A basic idea of these and some other but not necessarily all embodiments of the invention is:
1. Using a message, e.g. Binding Update, as an indication of successfully completed handover, and/or
2. After this message, e.g. Binding Update, triggering a mechanism to change the slow-start parameter in order to restore the congestion window faster than regular TCP.

The above embodiments may be considered as a conservative scheme, which changes the threshold in slow-start algorithm (ssthresh). It increases ssthresh to the value of the previous congestion window. Because the congestion window grows exponentially before ssthresh and grows linearly after ssthresh, higher ssthresh lets the congestion window grows faster.
This alternative 2. is a moderate scheme which changes the initial size of congestion window. It directly increases the congestion window to a high proper value. This value can be a predetermined value based on network performance or a dynamic value based on real-time network measurement. Better result on TCP throughput can be obtained.

The invention may be used in e.g. proxies and servers without standardization, in TCP terminals, such as mobile phone, PDA, laptop, or the like.

In one or more of the embodiments of the invention, a fast retransmit and fast recovery mechanism is initiated instead of keeping slow-start initiate after handover completion message, e.g. Binding Update.

The below described embodiment of the invention pays attention to the two scenarios that MN is taken as the TCP receiver and sender.

IPv6 [Internet Protocol version 6], especially Mobile IPv6, is a research field, in which an Internet draft on mobile IPv6 is likely to become a RFC in the near future. However, if the MN is at some geographical and topological distance away from the HA and CN, the amount of time involved in sending the binding updates may be greater than hundred milliseconds. This latency in routing update may cause poor TCP performance. The described embodiments provide TCP enhancement during handovers in mobile IPv6. According to some embodiments, a mechanism is provided which recovers the slow-start threshold ssthresh to more than half of, up to the previous value of the old congestion window after a handover completion if the timeout is caused by the handover. This improves TCP throughput. For a flow with a large congestion window W, a halving of the congestion window can be a significant performance reduction as it takes at least W/2 round-trip times for the flow to recover its old congestion window.

There are two scenarios described in the following, with MN acting as a receiver and MN as a sender.

MN acting as a receiver: If the CN determines that the packet loss, reordered packets and delayed packets are produced due to handover process and not to congestion, then the CN may implement the option of undoing the halving in the congestion window, by means of which the throughput of TCP connection and the utilization of network resource can thus be improved. When the CN receives the Binding Update from MN, this mechanism is triggered.

The objective is achieved by an algorithm, which comprises the following steps:
(1) When a MN moves from one subnet into another foreign subnet, it acquires its care-of-address in the foreign link, by using the IPv6 Neighbour Discovery or other methods;
(2) the MN registers the association between the MN's home address and the current care-of-address with its home agent and the CN by sending a packet containing a "Binding Update" destination option;
(3) whenever the CN receives a "Binding Update", the software, e.g. Mobile IPv6 software, in the CN signals the TCP software;
(4) the TCP software on CN stepwisely increases the slow-start threshold ssthresh to a value of more than half of, up to the previous value of the old congestion window if slow-start happened, effectively slow starting until the congestion window has reached its old value. In addition to avoid the unnecessary retransmits, CN may preferably adjust the duplicate acknowledgement threshold or the retransmit timeout parameters so as to reduce retransmits.

MN acting as a sender: If the MN determines that packet loss, reordered packets and delayed packets are produced due to handover process but not to congestion, then the MN preferably has the option, means and functions of undoing the halving in the congestion window, that is of increasing the slow-start threshold ssthresh to a value of more than half of, up to the previous value of the old congestion window. Thereby, the throughput of TCP connection and the utilization of network resource can thus be improved. When the MN forms the Binding Update, this mechanism is triggered in the MN.

The objective is achieved by an algorithm, which comprises the following steps:
(1) When a MN moves from one subnet into another foreign subnet, it acquires its care-of-address in the foreign link, e.g. by using the IPv6 Neighbor Discovery;
(2) whenever the MN forms a "Binding Update", the software, e.g. Mobile IPv6 software in the MN signals the TCP software;
(3) the TCP software on MN increases the slow-start threshold ssthresh to the previous value of the old congestion window if slow-start happens, effectively slow starting until the congestion window has reached its old value. In addition to avoid the unnecessary retransmits, MN may be equipped to adjust the duplicate acknowledgement threshold or the retransmit timeout parameters.

The (previous) slow-start threshold ssthresh value of the old congestion window may be stored in the MN and/or in the CN, e.g. if slow-start happens,

These embodiments of the invention present a mechanism to undo unnecessary congestion control responses to reordered or delayed or lost packets due to handover. In Mobile IPv6, after a MN acquires its care-of-address in a foreign link, it will register this care-of-address with its home agent and the CN by sending the "Binding Update" destination option. The "Binding Update" destination option is the earliest signal for the CN to be informed that the handover is successful and will complete soon. Hence, it is the earliest time for CN and MN to be able to undo congestion control.

If congestion control in TCP does not run during handover which performance is good enough, the proposed mechanism is preferably not in effect.

There are key actions in the present invention to improve earlier solutions:
- Undo unnecessary congestion control due to handover after a handover completes,
- Recover previous control parameters as fast as possible.

Some advantages of the embodiments are:
- Improving the TCP throughput
- Improving the utilization of network resource
- Only minor modifications to the TCP and Mobile IPv6 software in TCP transmitter needed

The invention can be implemented in TCP terminals with small modifications. TCP terminals could be any mobile equipment, such as mobile phones, PDAs and laptops, which have mobile IPv6 stack. The TCP performance can be improved when this method is used.

Fig. 4 shows another embodiment of the invention employing the above described means and functions of Mobile IP, preferably Mobile IPv6, basic operation. Reference numerals identical to the reference numerals used in Fig. 1 designate identical or at least similar means and structures, as described above. The network environment and handover process are as same as the embodiment shown in Figure 1. Figure 4 provides more details and shows some network elements which are not shown in Figure 1. The MN 1 has a home network 10 providing home link, home address, and home subnet prefix, and comprising an home agent 2. When the MN 1 has moved to another network, data/messages/information are exchanged between MN 1 and home agent 2 or CN 7 via internet 6 and foreign/visited or access networks 11, 13 having access routers 12, 14, as shown in Fig. 4. Network 11 provides foreign link, care-of address, and foreign subnet prefix. A Binding Update message is generated in and sent from the MN 1 via internet 6 to the home network 10.

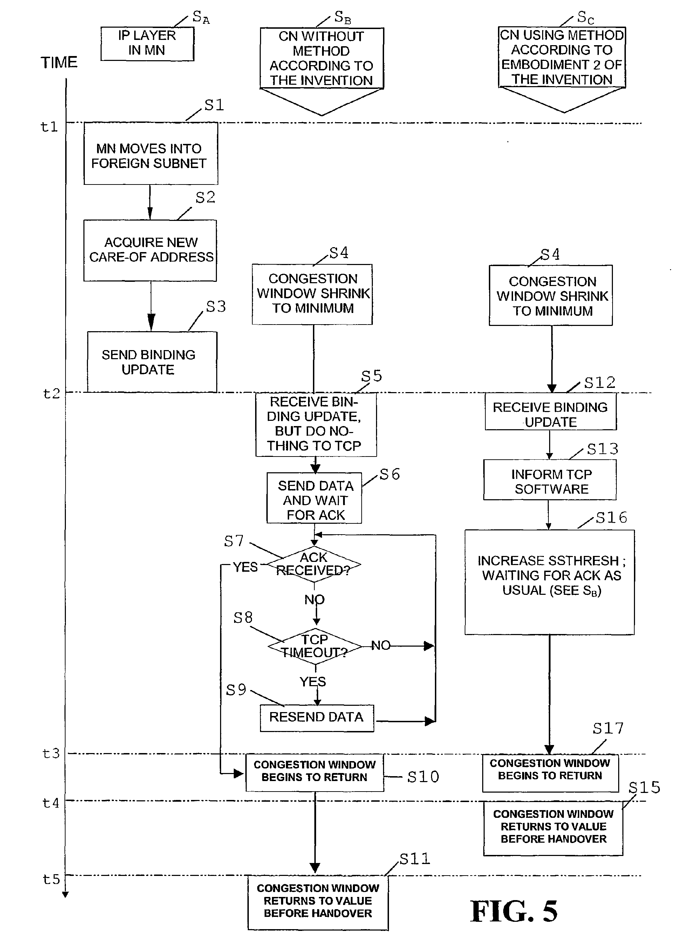

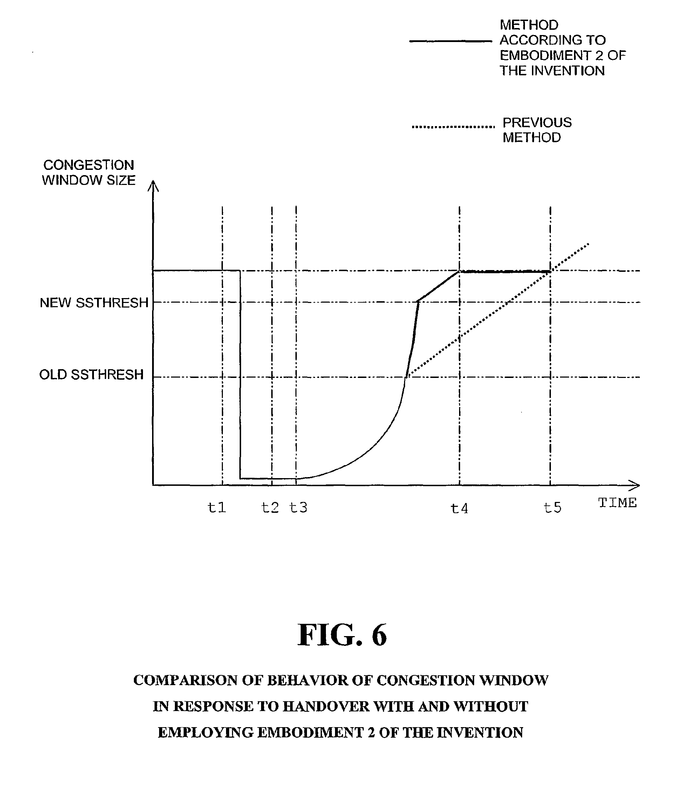

Figs. 5 and 6 illustrate a second embodiment of the method/system according to the invention, and show flow charts with a time scale for comparing the prior method and the second embodiment. The time axis is shown at the right-hand side of Fig. 5. As mentioned above, the time points t1 to t5 represent the following: t1: Handover begin; t2: Binding Update trigger; t3: Arrival of first ACK; t4: Congestion window size back to the value before handover in the embodiments of the present invention; t5: Congestion window size back to the value before handover in prior art.

The left column S_{A} of Fig. 5 represents the IP layer in the MN 1. The middle column S_{B} shows the normal previous behaviour of CN 7 when not employing the embodiment according to the invention. The left column S_{A} and middle column S_{B} of Fig. 5 are identical to the left and middle columns of Fig. 2 so that it is referred to the above description of the steps and functions of these columns, as well as of step S4 of the right-hand column S_{C.}

The right-hand column S_{C} of Fig. 5 shows the functioning of CN 7 when employing the second embodiment (embodiment 2) of the method and system according to the invention. In step S12, the CN 7 receives the Binding Update message, and then informs its TCP software/structure thereon (step S13). The TCP software responds by executing step S16, i.e. it immediately increases the threshold value ssthresh to a value "New ssthresh" higher than the previous customary value "old ssthresh", as shown in Fig. 6.

The threshold value ssthresh is thus set to be higher than the value set according to the prior method (in which the ssthresh value was set to one half of the previous value before handover begin, see Fig. 6 "OLD ssthresh"), for example to a range of 1.1 to 2.0 of the value "old ssthresh", more preferably 1.5 to 2.0 of the previous value. The system then waits for acknowlegdments ACK as usual, similar to steps S5 to S10 of the middle column S_{B} of Fig. 5.

Upon receipt of ACKs (step S17), the congestion window size is exponentially increased up to the value "new ssthresh". Thereafter, the congestion window size linearily increases up to the maximum value (value before handover), as shown in Fig. 6. The congestion window size is hence returned to the value before handover much quicker than in the previous method.

Fig 6 shows a comparison of the behavior of the congestion window in response to handover with and without employing the above discussed second embodiment of the system and method according to the invention. The X axis of Fig. 6 represents time, and the Y axis represents the congestion window size and thus TCP throughput. The solid line illustrates the behavior of the congestion window in response to handover when employing the second embodiment of the invention, i.e. when increasing the congestion window size directly after handover detection, that is after receipt of the message confirming handover completion such as the BU (Binding Update) message. The dotted line of Fig. 6 shows the conventional behavior of the congestion window in response to handover when not using the invention, i.e when employing the old threshold value. After handover begin the width cwnd of the congestion window is reduced to the lowest value. After handover end, the width of the congestion window is exponentially increased to the ssthresh value. As shown in Fig. 6, the second embodiment of the invention provides a very fast growth of the congestion window size and thus system performance and throughput, after any handover occurrence.

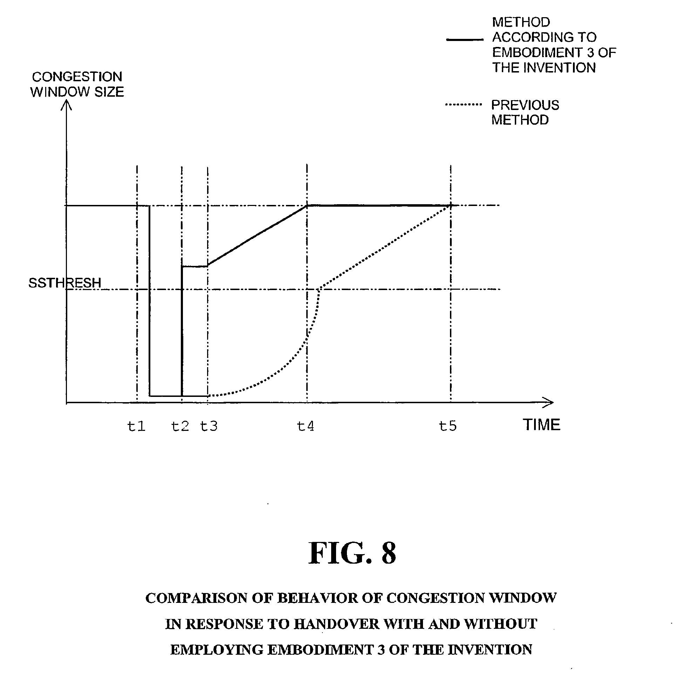

In accordance with a further embodiment of the invention illustrated in Figs. 7 and 8, the width of the congestion window is stepwise increased at the end of the handover, e.g. when sending or receiving a binding update message or packet.

Similar to the above described embodiments, the objective of this embodiment is to improve the throughput of TCP connection and the utilization of the network resource during the MN hands over. The objective is achieved by immediately increasing the congestion window to a high proper value while the handover finished, not as usual which relies on the TCP slow-start mechanism to recover from the minimal initial window (usually the initial window is only 1 segment).

When the MN acts as the TCP sender, the method comprises the following steps:
1) When MN moves from one subnet into another foreign subnet, it acquires its care-of address in foreign link, according to the methods e.g. of IPv6 such as Neighbour Discovery or other methods;
2) By sending "Binding Update" message, the MN registers the association between the MN's home address and its care-of address with home agent (HA) and CN;
3) After MN sends "Binding Update" message, the Mobile IPv6 software in the MN informs the TCP software in the MN of the handover;
4) The TCP software on MN increases the congestion window size to a proper value instead of 1 segment when it receives the signal from the Mobile IPv6 software.

The same function may also take place in the CN when it is informed on successful handover, e.g. by receiving a BU message.

Figs. 7 and 8 illustrate this third embodiment of the method/system according to the invention, and show flow charts with a time scale for comparing the previous method and the second embodiment. The time axis is shown at the right-hand side of Fig. 7. As mentioned above, the time points t1 to t5 represent the following: t1: Handover begin; t2: Binding Update trigger; t3: Arrival of first ACK; t4: Congestion window size back to the value before handover in the embodiments of the present invention; t5: Congestion window size back to the value before handover in prior art.

The left column S_{A} of Fig. 7 represents the IP layer in the MN 1. The middle column S_{B} shows the normal previous behaviour of CN 7 when not employing this embodiment according to the invention. The left column S_{A} and middle column S_{B} of Fig. 7 are identical to the left and middle columns of Fig. 2 and 5 so that it is referred to the above description of the steps and functions of these columns, as well as of step S4 of the right-hand column S_{C}.

The right-hand column S_{C} of Fig. 7 shows the functioning of CN 7 when employing the third embodiment (embodiment 3) of the method and system according to the invention. In step S12, the CN 7 receives the Binding Update message, and then informs its TCP software/structure thereon (step S13). The TCP software responds by executing step S18, i.e. it immediately increases the width or size of the congestion window in a stepwise manner to a proper value. This value can be predetermined based on the network performance and/or can be dynamic updated based on network measurement. It may be equal to one half of the window size value before handover, or may be lower or higher than one-half of this value. A value of at least one-half of the window size value before handover is preferred. The system then waits for acknowlegdments ACK as usual, similar to steps S5 to S10 of the middle column S_{B} of Fig. 5. After receipt of the first ACKs at time t3, the congestion window size is linearly increased up to the window size value before handover (time t4). Thus the window size is very rapidly brought back to the maximum admissible size under the present conditions, as shown in Fig. 8.

Fig 8 shows a comparison of the behavior of the congestion window in response to handover with and without employing the above discussed third embodiment of the system and method according to the invention. The X axis of Fig. 8 represents time, and the Y axis represents the congestion window size and thus TCP throughput. The solid line illustrates the behavior of the congestion window in response to handover when employing the third embodiment of the invention, i.e. when increasing the congestion window size directly after handover detection, that is after receipt of the message confirming handover completion such as the BU (Binding Update) message. The dotted line of Fig. 8 shows the conventional behavior of the congestion window in response to handover when not using the invention, i.e when employing the old threshold value and old window size. After handover begin (t1) the width cwnd of the congestion window is reduced to the lowest value. After handover end (t2), the width of the congestion window is stepwise increased to the. As shown in Fig. 8, the third embodiment of the invention provides a very fast growth of the congestion window size and thus system performance and throughput, after any handover occurrence.

An advantage of the invention is to increase the transmitting rate immediately after the handover finish by increasing the initial window of slow-start mechanism, so as to improve the throughput just after the handover finish, and utilization of network resource.

Another advantage of the invention is to use a "handover successful" message or "handover completed" message such as the "Binding Update" message as the trigger to begin the transmission as soon as possible, instead of waiting for the recovery of TCP mechanism itself.

As mentioned above, in current Mobile IPv6 networks, the duration time of handover of MN between two subnets is quite long, compared e.g. with the Round-trip time (RTT). Even when using enhanced handover mechanisms, such as Fast Handover proposed in IETF, the handover time is still a multiple of RTT. The long handover time usually will result in the timeout in the TCP sender, and the congestion window (CWND) in the TCP sender will decrease to 1 MSS and invoke the slow-start mechanism in prior art devices. In fixed networks, the timeout is the signal of network congestion. In order to alleviate the network load during congestion, the transmission rate i.e. the congestion window will be decreased dramatically, saying 1 segment. However, in Mobile IPv6 networks, misinterpreting the timeout due to handover as congestion will induce the throughput degrade and also underutilize the network resources.

As shown in the Figures, at time t1, MN begins a handover. The handover will need some time until MN sends a "binding update" message at time t2. However, in the TCP layer, the TCP sender does not know anything about the handover. During the handover, the timeout may happen several times, and he TCP sender retransmits one packet after each timeout. In the prior art, until time t3, the TCP sender could successfully retransmit the packets, with the congestion window size 1. Then in the prior art slow-start process, the congestion window increases one by one with every new ACK arriving. This prior art slow-start process is illustrated by the dotted lines in Fig. 8 (denoted "previous method").

The present invention improves the TCP performance in the current situation. The congestion window size may be stepwise increased at the time of sending or receiving the indication of handover end, that is at time t2. The congestion window size may be stepwise, i.e. immediately increased to a proper determined value. The determined value may e.g. lie in the range of from 20 % to 100% of the size of the congestion window immediately before handover begin at time t1. A preferred determined value can for instance be one half (50%) of the previous congestion window size before handover begin at time t1. The determined value can for instance also be higher than one half, e.g. 100% of the previous congestion window size before handover begin at time t1, t4.

There are key actions in the present embodiments of the invention to improve earlier solutions: Taking advantage of, i.e. using a message, for example a MIP message such as the Mobile IPv6 message to trigger TCP optimisation, the transmission can begin earlier than usual. Further, fast or stepwise increase of the congestion window to a proper value after handover, eliminates the slow-start effect. The congestion window can be recovered to an appropriate value faster than usual.

Advantages are that the TCP throughput is improved, the utilization of network resource is increased, and only minor modifications to the TCP and Mobile IPv6 software in TCP transmitter are needed, which are easy to implement in network elements such as mobile phones, terminals, nodes etc.

From the congestion window curve, with this embodiment of the present invention the congestion window will increase earlier and faster than in the normal situation. With the present invention, the throughput is improved during handover.

The specific features of the above discussed embodiments can also be applied in any arbitrary combination. For instance, the congestion window size may be stepwise increased to a predetermined value (lower than one-half of the window size value before handover) after the handover complete message, e.g. BU message, and thereafter be exponentially increased to another threshold value ssthresh higher than one-half of the window size value before handover, with a final linear increase up to the maximum admissible value.

The congestion control means of the first and second network elements, i.e. the mobile node and the correspondent node, may be implemented using TCP (Transport Control Protocol) software, preferably a Mobile IPv6 software.

Although the invention has been described above with reference to specific embodiments, the scope of the invention also covers any alterations, additions, modifications, and omissions of the disclosed features.

## Claims

1. Method for managing a communication between a first network element and a second network element, wherein
the communication is performed via a network on a packet basis,
acknowledgment messages acknowledging receipt of packets are returned to the network element having sent these packets, and
a congestion control is performed which variably defines an allowable number of packets which can be sent before receipt of acknowledgment messages for these packets, wherein said allowable number of packets is reduced in case of packet loss during transmission,
wherein, when the first network element performs a hand-over and sends a message informing the network or a network element on the hand-over, the network or network element changes the congestion control to provide faster recovery rate of said allowable number after handover as compared to the recovery rate of said allowable number after packet loss,
wherein the congestion control provides a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the first network element performs a hand-over and sends a message informing the network or a network element on the hand-over, the network or network element changes the congestion window size control to provide faster recovery rate of the window size after handover as compared to the recovery rate of the window size after packet loss,
wherein the faster recovery rate includes a step of increasing the size of a congestion window in a step-wise manner, and
wherein the size of the congestion window is step-wise increased to at least approximately 50% of the size of the previous value of the congestion window before start of the handover.

2. Method according to claim 1, wherein said congestion control is performed in at least one of the first and second network elements.

3. Method according to any one of the preceding claims, wherein the first network element is a mobile node which, when moving from one subnet into another foreign subnet, acquires a care-of address, and sends said message to its home network and/or to a correspondent node informing the network or node on the care-of-address.

4. Method according to any one of the preceding claims, wherein said message is a "Binding Update" message.

5. Method according to any one of the preceding claims, wherein said second network element comprises a fast retransmit and fast recovery algorithm so as to provide said faster recovery rate, wherein, when the message is sent from the first network element to the second network element, the second network element, when receiving the message, triggers the invocation of said fast retransmit and fast recovery algorithm.

6. Method according to any one of the preceding claims, wherein said first network element comprises a fast retransmit and fast recovery algorithm so as to provide said faster recovery rate, and is adapted to trigger, when generating said message, the invocation of said fast retransmit and fast recovery algorithm.

7. Method according to any one of the preceding claims, wherein the faster recovery rate is implemented by increasing the size of a congestion window in a step-wise manner to a value lying in a range from more than a minimum window size up to, and including the size of the window before handover, and by subsequent ramp-like or exponential increase of the congestion window size.

8. Method for managing a communication between a first network element and a second network element, wherein
the communication is performed via a network on a packet basis,
acknowledgment messages acknowledging receipt of packets are returned to the network element having sent these packets, and
a congestion control is performed which variably defines an allowable number of packets which can be sent before receipt of acknowledgment messages for these packets, wherein said allowable number of packets is reduced in case of packet loss during transmission, wherein, when the first network element performs a hand-over and sends a message informing the network or a network element on the hand-over, the network or network element changes the congestion control to provide faster recovery rate of said allowable number after handover as compared to the recovery rate of said allowable number after packet loss,
wherein the congestion control provides a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the first network element performs a hand-over and sends a message informing the network or a network element on the hand-over, the network or network element changes the congestion window size control to provide faster recovery rate of the window size after handover as compared to the recovery rate of the window size after packet loss, and
wherein the congestion control includes increasing the size of a congestion window in an exponential manner up to a threshold value and a subsequent ramp-like increasing of the congestion window size, wherein the faster recovery rate is implemented by setting the threshold value to at least one-half of, and up to, the previous value of the congestion window before start of the handover.

9. Method according to any one of the preceding claims, wherein the second network element is a correspondent node.

10. Method according to any one of the preceding claims, wherein at least one of the first and second network elements comprises a congestion control means, and wherein when generating or receiving said message, the first and/or second network element informs its congestion control means which in response triggers the invocation of a fast retransmit and fast recovery algorithm.

11. Method according to any one of the preceding claims, wherein at least one of the first and second network elements comprises a congestion control means, wherein the network element when generating or receiving said message, sends a signal to the congestion control means, the signal indicating to the congestion control means that the congestion control is to be changed so as to provide said faster recovery rate.

12. Method according to claim 11, wherein the signal is implemented by duplicating ACK packets by an IP layer function to a TCP layer function.

13. Method according to any one of the preceding claims, wherein the communication between the first and second network elements is an Mobile IPv6-based communication.

14. System for managing a communication between a first network element and a second network element, wherein
the communication is performed via a network on a packet basis, and acknowledgment messages acknowledging receipt of packets are returned to the network element having sent these packets, comprising
congestion control means for performing a congestion control which variably defines an allowable number of packets which can be sent before receipt of acknowledgment messages for these packets, wherein said allowable number of packets is reduced in case of packet loss during transmission,
wherein, when the first network element performs a hand-over and sends a message informing the network or a network element on the hand-over, the congestion control means changes the congestion control to provide faster recovery rate of said allowable number after handover as compared to the recovery rate of said allowable number after packet loss,
wherein the congestion control means provides a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the first network element performs a hand-over and sends a message informing the network or a network element on the hand-over, the congestion control means is adapted to change the congestion window size control to provide faster recovery rate of the window size after handover as compared to the recovery rate of the window size after packet loss,
wherein the faster recovery rate includes a step of increasing the size of a congestion window in a step-wise manner, wherein the size of the congestion window is step-wise increased to at least approximately 50% of the size of the previous value of the congestion window before start of the handover.

15. System according to claim 14, wherein said congestion control means is provided in at least one of the first and second network elements.

16. System according to any one of the preceding system claims, wherein the first network element is a mobile node which, when moving from one subnet into another foreign subnet, acquires a care-of address, and sends said message to its home network informing the latter on the care-of-address.

17. System according to any one of the preceding system claims, wherein said message is a "Binding Update" message.

18. System according to any one of the preceding system claims, wherein said second network element comprises a fast retransmit and fast recovery algorithm so as to provide said faster recovery rate, wherein, when the message is sent from the first network element to the second network element, the second network element, when receiving the message, triggers the invocation of said fast retransmit and fast recovery algorithm.

19. System according to any one of the preceding system claims, wherein said first network element comprises a fast retransmit and fast recovery algorithm so as to provide said faster recovery rate, and is adapted to trigger, when generating said message, the invocation of said fast retransmit and fast recovery algorithm.

20. System according to any one of the preceding system claims, wherein the faster recovery rate is implemented by increasing the size of a congestion window in a step-wise manner to a value lying in a range from more than a minimum window size up to, and including the size of the window before handover, and by subsequent ramp-like or exponential increase of the congestion window size.

21. System for managing a communication between a first network element and a second network element, wherein
the communication is performed via a network on a packet basis, and acknowledgment messages acknowledging receipt of packets are returned to the network element having sent these packets, comprising
congestion control means for performing a congestion control which variably defines an allowable number of packets which can be sent before receipt of acknowledgment messages for these packets, wherein said allowable number of packets is reduced in case of packet loss during transmission,
wherein, when the first network element performs a hand-over and sends a message informing the network or a network element on the hand-over, the congestion control means changes the congestion control to provide faster recovery rate of said allowable number after handover as compared to the recovery rate of said allowable number after packet loss,
wherein the congestion control means provides a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the first network element performs a hand-over and sends a message informing the network or a network element on the hand-over, the congestion control means is adapted to change the congestion window size control to provide faster recovery rate of the window size after handover as compared to the recovery rate of the window size after packet loss, wherein the congestion control includes increasing the size of a congestion window in an exponential manner up to a threshold value and a subsequent ramp-like increasing of the congestion window size, wherein the faster recovery rate is implemented by setting the threshold value to at least one-half of, and up to, the previous value of the congestion window before start of the handover.

22. System according to any one of the preceding system claims, wherein the second network element is a correspondent node.

23. System according to any one of the preceding system claims, wherein at least one of the first and second network elements comprises a congestion control means, and wherein when generating or receiving said message, the first and/or second network element informs its congestion control means which in response triggers the invocation of a fast retransmit and fast recovery algorithm.

24. System according to any one of the preceding system claims, wherein at least one of the first and second network elements comprises a congestion control means, wherein the network element when generating or receiving said message, sends a signal to the congestion control means, the signal indicating to the congestion control means that the congestion control is to be changed so as to provide said faster recovery rate.

25. System according to claim 27, wherein the signal is implemented by duplicating ACK packets by an IP layer function to a TCP layer function.

26. System according to any one of the preceding system claims, wherein the communication between the first and second network elements is an Mobile IPv6-based communication.

27. Network element to be used in a system for managing a communication between network elements, preferably as defined in any one of claims 14 to 20, wherein the communication is performed via a network on a packet basis, and acknowledgment messages acknowledging receipt of packets are returned to the network element having sent these packets, comprising
congestion control means for performing a congestion control which variably defines an allowable number of packets which can be sent before receipt of acknowledgment messages for these packets, wherein said allowable number of packets is reduced in case of packet loss during transmission,
wherein, when the network element performs a hand-over and sends a message informing the network or a network element on the hand-over, the congestion control means is adapted to change the congestion control to provide faster recovery rate of said allowable number after handover as compared to the recovery rate of said allowable number after packet loss,
wherein the congestion control means provides a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the network element performs a hand-over and sends a message informing the network or a network element on the hand-over, the congestion control means is adapted to change the congestion window size control to provide faster recovery rate of the window size after handover as compared to the recovery rate of the window size after packet loss,
wherein the size of the congestion window is step-wisely increased to at least approximately 50% of the size of the previous value of the congestion window before start of the handover.

28. Network element according to claim 27, wherein said network element comprises a fast retransmit and fast recovery algorithm so as to provide said faster recovery rate, and is adapted to trigger, when generating said message, the invocation of said fast retransmit and fast recovery algorithm.

29. Network element to be used in a system for managing a communication between network elements, preferably as defined in any one of claims 21 to 26, wherein the communication is performed via a network on a packet basis, and acknowledgment messages acknowledging receipt of packets are returned to the network element having sent these packets, comprising
congestion control means for performing a congestion control which variably defines an allowable number of packets which can be sent before receipt of acknowledgment messages for these packets, wherein said allowable number of packets is reduced in case of packet loss during transmission,
wherein, when the network element performs a hand-over and sends a message informing the network or a network element on the hand-over, the congestion control' means is adapted to change the congestion control to provide faster recovery rate of said allowable number after handover as compared to the recovery rate of said allowable number after packet loss,
wherein the congestion control means is adapted to provide a congestion window of variable size, the size of the congestion window defining said allowable number of packets which can be sent before receipt of acknowledgment messages for these packets, and the size being controlled dependant on the number of sent packets for which no acknowledgment messages have been received so that the window size is reduced in case of packet loss during transmission,
wherein, when the network element performs a hand-over and sends a message informing the network or a network element on the hand-over, the congestion control means is adapted to change the congestion window size control to provide faster recovery rate of the window size after handover as compared to the recovery rate of the window size after packet loss, wherein the congestion control includes increasing the size of a congestion window in an exponential manner up to a threshold value and a subsequent ramp-like increasing of the congestion window size, wherein the faster recovery rate is implemented by setting the threshold value to at least one-half of, and up to, the previous value of the congestion window before start of the handover.

30. Network element according to any one of the preceding network element claims, wherein the network element comprises a congestion control means, and wherein when generating or receiving said message, the network element informs its congestion control means which in response triggers the invocation of a fast retransmit and fast recovery algorithm.

31. Network element according to any one of claims 27 to 30, wherein the network element comprises a congestion control means, wherein the network element when generating or receiving said message, sends a signal to the congestion control means, the signal indicating to the congestion control means that the congestion control is to be changed so as to provide said faster recovery rate.

32. Network element according to claim 31, wherein the signal is implemented by duplicating ACK packets by an IP layer function to a TCP layer function.

## Patentansprüche

1. Verfahren zum Verwalten einer Kommunikation zwischen einem ersten Netzwerkelement und einem zweiten Netzwerkelement, wobei
die Kommunikation über ein Netzwerk auf einer Paketbasis durchgeführt wird,
Bestätigungsmitteilungen, die einen Empfang der Pakete bestätigen, an das Netzwerkelement, das diese Pakete gesendet hat, zurückgesendet werden, und
eine Überlastungssteuerung durchgeführt wird, die variabel eine zulässige Anzahl von Paketen definiert, die vor einem Empfang einer Bestätigungsmitteilung für diese Pakete gesendet werden können, wobei die zulässige Zahl an Paketen im Fall eines Paketverlustes während einer Übertragung reduziert wird,
wobei, wenn das erste Netzwerkelement eine Übergabe durchführt und eine Mitteilung sendet, die das Netzwerk oder ein Netzwerkelement über die Übergabe informiert, das Netzwerk oder Netzwerkelement die Überlastungssteuerung ändert, um eine schnellere Wiederherstellungsrate der zulässigen Anzahl nach einer Übergabe im Vergleich zu der Wiederherstellungsrate der zulässigen Anzahl nach einem Paketverlust bereitzustellen,
wobei die Überlastungssteuerung ein Überlastungsfenster von variabler Größe bereitstellt, wobei die Größe des Überlastungsfensters die zulässige Anzahl von Paketen definiert, die vor einem Empfang von Bestätigungsmitteilungen für diese Pakete gesendet werden können, und die Größe in Abhängigkeit von der Anzahl der gesendeten Pakete, für die keine Bestätigungsmitteilungen empfangen wurden, gesteuert wird, so dass die Fenstergröße im Fall eines Paketverlustes während einer Übertragung reduziert wird,
wobei, wenn das erste Netzwerkelement eine Übergabe durchführt und eine Mitteilung sendet, die das Netzwerk oder ein Netzwerkelement über die Übergabe informiert, das Netzwerk oder Netzwerkelement die Überlastungsfenstergrößensteuerung ändert, um eine schnellere Wiederherstellungsrate der Fenstergröße nach einer Übergabe im Vergleich zu der Wiederherstellungsrate der Fenstergröße nach einem Paketverlust bereitzustellen,
wobei die schnellere Wiederherstellungsrate einen Schritt des schrittweise Vergrößerns der Größe eines Überlastungsfensters umfasst, und
wobei die Größe des Überlastungsfensters schrittweise auf zumindest ungefähr 50% der Größe des vorhergehenden Werts des Überlastungsfensters vor dem Start der Übergabe vergrößert wird.

2. Verfahren gemäß Anspruch 1, wobei die Überlastungssteuerung in zumindest einem des ersten und zweiten Netzwerkelements durchgeführt wird.

3. Verfahren gemäß einem der vorstehenden Ansprüche, wobei das erstes Netzwerkelement ein Mobilknoten ist, der, wenn er sich von einem Teilnetz in ein anderes fremdes Teilnetz bewegt, eine Care-of-Adresse erhält, und die Mitteilung an sein Heimnetzwerk und/oder an einen Korrespondenzknoten sendet, die das Netzwerk oder den Knoten über die Care-of-Adresse informiert.

4. Verfahren gemäß einem der vorstehenden Ansprüche, wobei die Mitteilung eine "Binding Update" -Mitteilung ist.

5. Verfahren gemäß einem der vorstehenden Ansprüche, wobei das zweite Netzwerkelement einen Algorithmus zur schnellen erneuten Übertragung und schnellen Wiederherstellung umfasst, um die schnellere Wiederherstellungsrate bereitzustellen, wobei, wenn die Mitteilung von dem ersten Netzwerkelement an das zweite Netzwerkelement gesendet wird, das zweite Netzwerkelement, wenn es die Mitteilung empfängt, den Aufruf des Algorithmus für die schnelle erneute Übertragung und die schnelle Wiederherstellung auslöst.

6. Verfahren gemäß einem der vorstehenden Ansprüche, wobei das erste Netzwerkelement einen Algorithmus für eine schnelle erneute Übertragung und schnelle Wiederherstellung umfasst, um eine schnellere Wiederherstellungsrate bereitzustellen, und dazu angepasst ist, wenn die Mitteilung erzeugt wird, den Aufruf des Algorithmus für die schnelle erneute Übertragung und die schnelle Wiederherstellung auszulösen.

7. Verfahren gemäß einem der vorstehenden Ansprüche, wobei die schnellere Wiederherstellungsrate durch schrittweise Vergrößern der Größe eines Überlastungsfensters auf einen Wert, der in einem Bereich von mehr als einer minimalen Fenstergröße bis einschließlich der Größe des Fensters vor der Übergabe liegt, und durch darauffolgendes rampenartiges oder exponentielles Vergrößern der Überlastungsfenstergröße implementiert wird.

8. Verfahren zum Verwalten einer Kommunikation zwischen einem ersten Netzwerkelement und einem zweiten Netzwerkelement, wobei
die Kommunikation über ein Netzwerk auf einer Paketbasis durchgeführt wird,
Bestätigungsmitteilungen, die einen Empfang der Pakete bestätigen, an das Netzwerkelement, das diese Pakete gesendet hat, zurückgesendet werden, und
eine Überlastungssteuerung durchgeführt wird, die variabel eine zulässige Anzahl von Paketen definiert, die vor einem Empfang von Bestätigungsmitteilungen für diese Pakete gesendet werden können, wobei die zulässige Anzahl von Paketen im Fall eines Paketverlustes während einer Übertragung reduziert wird, wobei, wenn das erste Netzwerkelement eine Übergabe durchführt und eine Mitteilung sendet, die das Netzwerk oder ein Netzwerkelement über die Übergabe informieren, das Netzwerk oder Netzwerkelement die Überlastungssteuerung ändert, um eine schnellere Wiederherstellungsrate der zulässigen Anzahl nach einer Übergabe im Vergleich zu der Wiederherstellungsrate der zulässigen Anzahl nach einem Paketverlust bereitzustellen,
wobei die Überlastungssteuerung ein Überlastungsfenster von variabler Größe bereitstellt, wobei die Größe des Überlastungsfensters die zulässige Anzahl von Paketen definiert, die vor einem Empfang von Bestätigungsmitteilungen für diese Pakete gesendet werden können, und die Größe in Abhängigkeit der Anzahl von gesendeten Paketen, für die keine Bestätigungsmitteilung empfangen wurden, gesteuert wird, so dass die Fenstergröße im Fall eines Paketverlustes während einer Übertragung reduziert wird,
wobei, wenn das Netzwerkelement eine Übergabe durchführt und eine Mitteilung sendet, die das Netzwerk oder ein Netzwerkelement über die Übergabe informiert, das Netzwerk oder Netzwerkelement die Überlastungsfenstergrößensteuerung ändert, um eine schnellere Wiederherstellungsrate der Fenstergröße nach einer Übergabe im Vergleich zu der Wiederherstellungsrate der Fenstergröße nach einem Paketverlust bereitzustellen, und
wobei die Überlastungssteuerung ein Vergrößern der Größe eines Überlastungsfensters auf exponentielle Weise bis zu einem Schwellenwert und ein darauffolgendes rampenartiges Vergrößern der Überlastungsfenstergröße umfasst, wobei die schnellere Wiederherstellungsrate durch Einstellen des Schwellenwerts auf zumindest die Hälfte von und bis zu dem vorhergehenden Wert des Überlastungsfensters vor dem Start der Übergabe implementiert wird.

9. Verfahren gemäß einem der vorstehenden Ansprüche, wobei das zweite Netzwerkelement ein Korrespondenzknoten ist.

10. Verfahren gemäß einem der vorstehenden Ansprüche, wobei zumindest eines des ersten und zweiten Netzwerkselements eine Überlastungssteuerungseinrichtung umfasst, und wobei, wenn es die Mitteilung erzeugt oder empfängt, das erste und/oder zweite Netzwerkelement seine Überlastungssteuerungseinrichtung informiert, welche als Antwort den Aufruf eines Algorithmus für die schnelle erneute Übertragung und schnelle Wiederherstellung auslöst.

11. Verfahren gemäß einem der vorstehenden Ansprüche, wobei zumindest eines des ersten und zweiten Netzwerkelements eine Überlastungssteuerungseinrichtung aufweist, wobei das Netzwerkelement, wenn es die Mitteilung erzeugt oder empfängt, ein Signal an die Überlastungssteuerungseinrichtung sendet, wobei das Signal der Überlastungssteuerungseinrichtung angibt, das die Überlastungssteuerung zu ändern ist, um eine schnellere Wiederherstellungsrate bereitzustellen.

12. Verfahren gemäß Anspruch 11, wobei das Signal durch Duplizieren von ACK-Paketen durch eine IP-Schicht-Funktion an eine TCP-Schicht-Funktion implementiert wird.

13. Verfahren gemäß einem der vorstehenden Ansprüche, wobei die Kommunikation zwischen dem ersten und zweiten Netzwerkelement eine IPv6 basierte Mobilkommunikation ist.

14. System zum Verwalten einer Kommunikation zwischen einem ersten Netzwerkelement und einem zweiten Netzwerkelement, wobei
die Kommunikation über ein Netzwerk auf einer Paketbasis durchgeführt wird und Bestätigungsmitteilungen, die den Empfang von Paketen bestätigen, an das Netzwerkelement, das diese Pakete gesendet hat, zurückgesendet werden, mit
einer Überlastungssteuerungseinrichtung zum Durchführen einer Überlastungssteuerung, die variabel eine zulässige Anzahl von Paketen definiert, die vor einem Empfang von Bestätigungsmitteilungen für diese Pakete gesendet werden können, wobei die zulässige Anzahl von Paketen im Fall eines Paketverlustes während einer Übertragung reduziert wird,
wobei, wenn das erste Netzwerkelement eine Übergabe durchführt und eine Mitteilung sendet, die das Netzwerk oder ein Netzwerkelement über die Übergabe informiert, die Überlastungssteuerungseinrichtung die Überlastungssteuerung ändert, um eine schnellere Wiederherstellungsrate der zulässigen Anzahl nach einer Übergabe im Vergleich zu der Wiederherstellungsrate der zulässigen Anzahl nach einem Paketverlust bereitzustellen,
wobei die Überlastungssteuerungseinrichtung ein Überlastungsfenster von variabler Größe bereitstellt, wobei die Größe des Überlastungsfensters die zulässige Anzahl von Paketen definiert, die vor einem Empfang von Bestätigungsmitteilungen für diese Pakete gesendet werden können, und die Größe in Abhängigkeit der Anzahl der gesendeten Pakete, für die keine Bestätigungsmitteilungen empfangen wurden, gesteuert wird, so dass die Fenstergröße im Fall eines Paketverlustes während einer Übertragung reduziert wird,
wobei, wenn das erste Netzwerkelement eine Übergabe durchführt und eine Mitteilung sendet, die das Netzwerk oder ein Netzwerkelement über die Übergabe informiert, die Überlastungssteuerungseinrichtung dazu angepasst ist, die Überlastungsfenstergrößensteuerung zu ändern, um im Vergleich zu der Wiederherstellungsrate einer Fenstergröße nach einem Paketverlust eine schnellere Wiederherstellungsrate der Fenstergröße nach einer Übergabe bereitzustellen,
wobei die schnellere Wiederherstellungsrate einen Schritt des schrittweise Vergrößerns der Größe des Überlastungsfensters umfasst, wobei die Größe des Überlastungsfensters schrittweise auf zumindest ungefähr 50% der Größe des vorhergehenden Werts des Überlastungsfensters vor dem Start der Übergabe vergrößert wird.

15. System gemäß Anspruch 14, wobei die Überlastungssteuerungseinrichtung in zumindest einem des ersten und zweiten Netzwerkelements bereitgestellt ist.

16. System gemäß einem der vorstehenden Systemansprüche, wobei das erste Netzwerkelement ein Mobilknoten ist, der, wenn er sich von einem Teilnetz in ein anderes fremdes Teilnetz bewegt, eine Care-of-Adresse erhält, und die Mitteilung an sein Heimnetzwerk sendet, die das Letztgenannte über die Care-of-Adresse informiert.

17. System gemäß einem der vorstehenden Systemansprüche, wobei die Mitteilung eine "Binding Update" -Mitteilung ist.

18. System gemäß einem der vorstehenden Systemansprüche, wobei das zweite Netzwerkelement einen Algorithmus zur schnellen erneuten Übertragung und schnellen Wiederherstellung umfasst, um eine schnellere Wiederherstellungsrate bereitzustellen, wobei, wenn die Mitteilung von dem ersten Netzwerkelement an das zweite Netzwerkelement gesendet wird, das zweite Netzwerkelement, wenn es die Mitteilung empfängt, den Aufruf des Algorithmus zur schnellen erneuten Übertragung und schnellen Wiederherstellung auslöst.

19. System gemäß einem der vorstehenden Systemansprüche, wobei das erste Netzwerkelement einen Algorithmus zur schnellen Übertragung und schnellen Wiederherstellung umfasst, um eine schnellere Wiederherstellungsrate bereitzustellen, und dazu angepasst ist, wenn es die Mitteilung erzeugt, den Aufruf des Algorithmus zur schnellen erneuten Übertragung und schnellen Wiederherstellung auszulösen.

20. System gemäß einem der vorstehenden Systemansprüche, wobei die schnellere Wiederherstellungsrate durch schrittweise Vergrößern der Größe eines Überlastungsfensters auf einen Wert, der in einem Bereich von mehr als einer minimalen Fenstergröße bis zu einschließlich der Größe des Fensters vor der Übergabe liegt, und durch darauffolgendes rampenartiges oder exponentielles Vergrößern der Überlastungsfenstergröße implementiert wird.

21. System zum Verwalten einer Kommunikation zwischen einem ersten Netzwerkelement und einem zweiten Netzwerkelement, wobei
die Kommunikation über ein Netzwerk auf einer Paketbasis durchgeführt wird, und Bestätigungsmitteilungen, die den Empfang von Paketen bestätigen, an das Netzwerkelement, das diese Pakete gesendet hat, zurückgesendet werden, mit
einer Überlastungssteuerungseinrichtung zum Durchführen einer Überlastungssteuerung, die variabel eine zulässige Anzahl von Paketen definiert, die vor einem Empfang der Bestätigungsmitteilungen für diese Pakete gesendet werden können, wobei die zulässige Anzahl von Paketen im Fall eines Paketverlustes während einer Übertragung reduziert wird,
wobei, wenn das erste Netzwerkelement eine Übergabe durchführt und eine Mitteilung sendet, die das Netzwerk oder ein Netzwerkelement über die Übergabe informiert, die Überlastungssteuerungseinrichtung die Überlastungssteuerung ändert, um eine schnellere Wiederherstellungsrate der zulässigen Anzahl nach einer Übergabe im Vergleich zu der Wiederherstellungsrate der zulässigen Anzahl nach einem Paketverlust bereitzustellen,
wobei die Überlastungssteuerungseinrichtung ein Überlastungsfenster von variabler Größe bereitstellt, wobei die Größe des Überlastungsfensters die zulässige Anzahl von Paketen definiert, die vor einem Empfang der Bestätigungsmitteilungen für diese Pakete gesendet werden können, und die Größe in Abhängigkeit der Anzahl der gesendeten Pakete, für die keine Bestätigungsmitteilungen empfangen wurden, gesteuert wird, so dass die Fenstergröße im Falle eines Paketverluste während einer Übertragung reduziert wird,
wobei, wenn das erste Netzwerkelement eine Übergabe durchführt und eine Mitteilung sendet, die das Netzwerk oder Netzwerkelement über die Übergabe informiert, die Überlastungssteuerungseinrichtung dazu angepasst ist, die Überlastungsfenstergrößensteuerung zu ändern, um eine schnellere Wiederherstellungsrate der Fenstergröße nach einer Übergabe im Vergleich zu der Wiederherstellungsrate der Fenstergröße nach einem Paketverlust bereitzustellen, wobei die Überlastungssteuerung ein Vergrößern der Größe eines Überlastungsfensters auf exponentielle Weise bis zu einem Schwellenwert und ein darauffolgendes rampenartiges Vergrößern der Überlastungsfenstergröße umfasst, wobei die schnellere Wiederherstellungsrate durch Einstellen des Schwellenwertes auf zumindest die Hälfte von und bis zu dem vorhergehenden Wert des Überlastungsfensters vor dem Start der Übergabe implementiert wird.

22. System gemäß einem der vorstehenden Systemansprüche, wobei das zweite Netzwerkelement ein Korrespondenzknoten ist.

23. System gemäß einem der vorstehenden Systemansprüche, wobei zumindest eines des ersten und zweiten Netzwerkelements eine Überlastungssteuerungseinrichtung umfasst, und wobei, wenn es die Mitteilung erzeugt oder empfängt, das erste und/oder zweite Netzwerkelement seine Überlastungssteuerungseinrichtung informiert, welche als Antwort den Aufruf des Algorithmus zur schnellen erneuten Übertragung und schnellen Wiederherstellung auslöst.

24. System gemäß einem der vorstehenden Systemansprüche, wobei zumindest eines des ersten und zweiten Netzwerkelements eine Überlastungssteuerungseinrichtung umfasst, wobei das Netzwerkelement, wenn es die Mitteilung erzeugt oder empfängt, ein Signal an die Überlastungssteuerungseinrichtung sendet, wobei das Signal der Überlastungssteuerungseinrichtung angibt, dass die Überlastungssteuerung zu ändern ist, um die schnellere Wiederherstellungsrate bereitzustellen.

25. System gemäß Anspruch 27, wobei das Signal durch Duplizieren von ACK-Paketen durch eine IP-Schicht-Funktion an eine TCP-Schicht-Funktion implementiert wird.

26. System gemäß einem der vorstehenden Systemansprüche, wobei die Kommunikation zwischen dem ersten und zweiten Netzwerkelement eine IPv6 basierte Mobilkommunikation ist.

27. Netzwerkelement, das in einem System zum Verwalten einer Kommunikation zwischen Netzwerkelementen, vorzugsweise gemäß einem der Ansprüche 14 bis 20, zu verwenden ist, wobei die Kommunikation über ein Netzwerk auf einer Paketbasis durchgeführt wird, und Bestätigungsmitteilungen, die den Empfang von Paketen bestätigen, an das Netzwerkelement, das diese Pakete gesendet hat, zurückgesendet werden, mit
einer Überlastungssteuerungseinrichtung zum Durchführen einer Überlastungssteuerung, die variabel eine zulässige Anzahl von Paketen definiert, die vor einem Empfang von Bestätigungsmitteilungen für diese Pakete gesendet werden können, wobei die zulässige Anzahl von Paketen im Fall eines Paketverlustes während einer Übertragung reduziert wird,
wobei, wenn das Netzwerkelement eine Übergabe durchführt und eine Mitteilung sendet, die das Netzwerk oder ein Netzwerkelement über die Übergabe informiert, die Überlastungssteuerungseinrichtung dazu angepasst ist, die Überlastungssteuerung zu ändern, um eine schnellere Wiederherstellungsrate der zulässigen Anzahl nach der Übergabe im Vergleich zu der Wiederherstellungsrate der zulässigen Anzahl nach einem Paketverlust bereitzustellen,
wobei die Überlastungssteuerungseinrichtung ein Überlastungsfenster von variabler Größe bereitstellt, wobei die Größe des Überlastungsfensters die zulässige Anzahl von Paketen definiert, die vor einem Empfang der Bestätigungsmitteilungen für diese Pakete gesendet werden können, und die Größe in Abhängigkeit der Anzahl der gesendeten Pakete, für die keine Bestätigungsmitteilungen empfangen wurden, gesteuert wird, so dass die Fenstergröße im Falle eines Paketverlustes während einer Übertragung reduziert wird,
wobei, wenn das Netzwerkelement eine Übergabe durchführt und eine Mitteilung sendet, die das Netzwerk oder ein Netzwerkelement über die Übergabe informiert, die Überlastungssteuerungseinrichtung dazu angepasst ist, die Überlastungsfenstergrößensteuerung zu ändern, um eine schnellere Wiederherstellungsrate der Fenstergröße nach einer Übergabe im Vergleich zu der Wiederherstellungsrate der Fenstergröße nach einem Paketverlust bereitzustellen,
wobei die Größe des Überlastungsfensters schrittweise auf zumindest ungefähr 50% der Größe des vorherigen Wertes des Überlastungsfensters vor dem Start der Übergabe vergrößert wird.

28. Netzwerkelement gemäß Anspruch 27, wobei das Netzwerkelement einen Algorithmus zur schnellen erneuten Übertragung und schnellen Wiederherstellung umfasst, um eine schnellere Wiederherstellungsrate bereitzustellen, und dazu angepasst ist, wenn es die Mitteilung erzeugt, den Aufruf des Algorithmus zur schnellen erneuten Übertragung und schnellen Wiederherstellung auszulösen.

29. Netzwerkelement, das in einem System zum Verwalten einer Kommunikation zwischen Netzwerkelementen, vorzugsweise gemäß einem der Ansprüche 21 bis 26, zu verwenden ist, wobei die Kommunikation über ein Netzwerk auf einer Paketbasis durchgeführt wird, und Bestätigungsmitteilungen, die den Empfang von Paketen bestätigen, an das Netzwerkelement, das diese Pakete gesendet hat, zurückgesendet werden, mit
einer Überlastungssteuerungseinrichtung zum Durchführen einer Überlastungssteuerung, die variabel eine zulässige Anzahl von Paketen definiert, die vor einem Empfang von Bestätigungsmitteilungen für diese Pakete gesendet werden können, wobei die zulässige Anzahl von Paketen im Falle eines Paketverlustes während einer Übertragung reduziert wird, wobei, wenn das Netzwerkelement eine Übergabe durchführt und eine Mitteilung sendet, die das Netzwerk oder ein Netzwerkelement über die Übergabe informiert, die Überlastungssteuerungseinrichtung dazu angepasst ist, die Überlastungssteuerung zu ändern, um eine schnellere Wiederherstellungsrate der zulässigen Anzahl nach einer Übergabe im Vergleich zu der Wiederherstellungsrate der zulässigen Anzahl nach einem Paketverlust bereitzustellen,
wobei die Überlastungssteuerungseinrichtung dazu angepasst ist, ein Überlastungsfenster von variabler Größe bereitzustellen, wobei die Größe des Überlastungsfensters die zulässige Anzahl von Paketen definiert, die vor einem Empfang von Bestätigungsmitteilungen für diese Pakete gesendet werden können, und die Größe in Abhängigkeit der Anzahl von gesendeten Paketen, für die keine Bestätigungsmitteilungen empfangen wurde, gesteuert wird, so dass die Fenstergröße im Falle eines Paketsverlustes während einer Übertragung reduziert wird,
wobei, wenn das Netzwerkelement eine Übergabe durchführt und eine Mitteilung sendet, die das Netzwerk oder ein Netzwerkelement über die Übergabe informiert, die Überlastungssteuerungseinrichtung dazu angepasst ist, die Überlastungsfenstergrößensteuerung zu ändern, um eine schnellere Wiederherstellungsrate der Fenstergröße nach einer Übergabe im Vergleich zu der Wiederherstellungsrate der Fenstergröße nach einem Paketverlust bereitzustellen, wobei die Überlastungssteuerung ein Vergrößern der Größe eines Überlastungsfenster auf exponentielle Weise bis zu einem Schwellenwert und ein darauffolgendes rampenartiges Vergrößern der Überlastungsfenstergröße umfasst, wobei die schnellere Wiederherstellungsrate durch Einstellen des Schwellenwertes auf zumindest eine Hälfte von und bis zu dem vorhergehenden Wert des Überlastungsfensters vor dem Start der Übergabe implementiert wird.

30. Netzwerkelement gemäß einem der vorstehenden Netzwerkelementansprüche, wobei das Netzwerkelement eine Überlastungssteuerungseinrichtung umfasst und wobei, wenn es die Mitteilung erzeugt oder empfängt, das Netzwerkelement seine Überlastungssteuerungseinrichtung informiert, welche als Antwort den Aufruf eines Algorithmus zur schnellen erneuten Übertragung und schnellen Wiederherstellung auslöst.

31. Netzwerkelement gemäß einem der Ansprüche 27 bis 30, wobei das Netzwerkelement eine Überlastungssteuerungseinrichtung umfasst, wobei das Netzwerkelement, wenn es die Mitteilung erzeugt oder empfängt, ein Signal an die Überlastungssteuerungseinrichtung sendet, wobei das Signal der Überlastungssteuerungseinrichtung angibt, dass die Überlastungssteuerung zu ändern ist, um eine schnellere Wiederherstellungsrate bereitzustellen.

32. Netzwerkelement gemäß Anspruch 31, wobei das Signal durch Duplizieren von ACK-Paketen durch eine IP-Schicht-Funktion an eine TCP-Schicht-Funktion implementiert wird.

## Revendications

1. Procédé pour gérer une communication entre un premier élément de réseau et un second élément de réseau, dans lequel
la communication est effectuée via un réseau sur une base de paquet, des messages d'accusé de réception accusant réception de paquets sont retournés à l'élément de réseau ayant envoyé ces paquets, et
un contrôle de l'encombrement est effectué qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque le premier élément de réseau effectue un transfert intercellulaire et envoie un message informant le réseau ou un élément de réseau du transfert intercellulaire, le réseau ou l'élément de réseau modifie le contrôle de l'encombrement pour fournir un taux de récupération plus rapide dudit nombre admissible après transfert intercellulaire par rapport au taux de récupération dudit nombre admissible après perte de paquet,
dans lequel le contrôle de l'encombrement fournit une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun accusé de réception n'a été reçu de sorte que la taille de fenêtre est réduite en cas de perte de paquets pendant la transmission,
dans lequel, lorsque le premier élément de réseau effectue un transfert intercellulaire et envoie un message informant le réseau ou un élément de réseau du transfert intercellulaire, le réseau ou l'élément de réseau modifie le contrôle de taille de fenêtre d'encombrement pour fournir un taux de récupération plus rapide de la taille de fenêtre après transfert intercellulaire par rapport au taux de récupération de la taille de fenêtre après perte de paquet.
dans lequel le taux de récupération plus rapide comprend une étape consistant à augmenter la taille d'une fenêtre d'encombrement de manière progressive, et
dans lequel la taille de la fenêtre d'encombrement est progressivement augmentée jusqu'à au moins approximativement 50% de la taille de la valeur précédente de la fenêtre d'encombrement avant le début du transfert intercellulaire.

2. Procédé selon la revendication 1, dans lequel ledit contrôle d'encombrement est effectué dans au moins un des premier et second éléments de réseau.

3. Procédé selon l'une quelconque des revendications précédentes, dans lequel le premier élément de réseau est un noeud mobile qui, lorsqu'il passe d'un sous réseau à un autre sous réseau étranger, acquière une adresse temporaire, et envoie ledit message à son réseau domestique et/ou au noeud correspondant informant le réseau ou le noeud de l'adresse temporaire.

4. Procédé selon l'une quelconque des revendications précédentes, dans lequel ledit message est un message de "mise à jour de l'association" ("binding update").

5. Procédé selon l'une quelconque des revendications précédentes, dans lequel ledit second élément de réseau comprend un algorithme de retransmission rapide et de récupération rapide de manière à fournir ledit taux de récupération plus rapide, dans lequel, lorsque le message est envoyé à partir du premier élément de réseau vers le second élément de réseau, le second élément de réseau, lorsqu'il reçoit le message, déclenche la demande d'exécution immédiate dudit algorithme de retransmission rapide et de récupération rapide.

6. Procédé selon l'une quelconque des revendications précédentes, dans lequel ledit premier élément de réseau comprend un algorithme de retransmission rapide et de récupération rapide de manière à fournir ledit taux de récupération plus rapide, et est adapté pour déclencher, lorsqu'il génère ledit message, la demande d'exécution immédiate dudit algorithme de retransmission rapide et de récupération rapide.

7. Procédé selon l'une quelconque des revendications précédentes, dans lequel le taux de récupération plus rapide est mis en oeuvre en augmentant la taille de la fenêtre d'encombrement d'une manière progressive jusqu'à une valeur comprise dans une fourchette allant de plus qu'une taille de fenêtre minimum jusqu'à, et incluant la taille de la fenêtre avant transfert intercellulaire, et par augmentation linéaire ou exponentielle subséquente de la taille de fenêtre d'encombrement.

8. Procédé pour gérer une communication entre un premier élément de réseau et un second élément de réseau, dans lequel
la communication est effectuée via un réseau sur une base de paquet, des messages d'accusé de réception accusant réception de paquets sont retournés à l'élément de réseau ayant envoyé ces paquets, et
un contrôle de l'encombrement est effectué qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque le premier élément de réseau effectue un transfert intercellulaire et envoie un message informant le réseau ou un élément de réseau du transfert intercellulaire, le réseau ou l'élément de réseau modifie le contôle de l'encombrement pour fournir un taux de récupération plus rapide dudit nombre admissible après transfert intercellulaire par rapport au taux de récupération dudit nombre admissible après perte de paquet,
dans lequel le contrôle de l'encombrement fournit une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun accusé de réception n'a été reçu de sorte que la taille de fenêtre est réduite en cas de perte de paquets pendant la transmission,
dans lequel, lorsque le premier élément de réseau effectue un transfert intercellulaire et envoie un message informant le réseau ou un élément de réseau du transfert intercellulaire, le réseau ou l'élément de réseau modifie le contrôle de taille de fenêtre d'encombrement pour fournir un taux de récupération plus rapide de la taille de fenêtre après transfert intercellulaire par rapport au taux de récupération de la taille de fenêtre après perte de paquet.
dans lequel le contrôle d'encombrement comprend une augmentation de la taille de la fenêtre d'encombrement d'une manière exponentielle jusqu'à une valeur seuil et une augmentation linéaire subséquente de la taille de fenêtre d'encombrement, dans lequel le taux de récupération plus rapide est mis en oeuvre en établissant la valeur seuil à au moins la moitié de, et jusqu'à, la valeur précédente de la fenêtre d'encombrement avant le début du transfert intercellulaire.

9. Procédé selon l'une quelconque des revendications précédentes, dans lequel le second élément de réseau est un noeud correspondant.

10. Procédé selon l'une quelconque des revendications précédentes, dans lequel au moins un des premier et second éléments de réseau comprend des moyens de contrôle d'encombrement, et dans lequel lorsqu'il génère ou reçoit ledit message, le premier et/ou second élément de réseau informe ses moyens de contrôle d'encombrement qui en réponse déclenchent la demande d'exécution immédiate d'un algorithme de retransmission rapide et de récupération rapide.

11. Procédé selon l'une quelconque des revendications précédentes, dans lequel au moins un des premier et second éléments de réseau comprend des moyens de contrôle d'encombrement, dans lequel l'élément de réseau lorsqu'il génère ou reçoit ledit message, envoie un signal aux moyens de contrôle d'encombrement, le signal indiquant aux moyens de contrôle d'encombrement que le contrôle d'encombrement doit être modifié de manière à fournir ledit taux de récupération plus rapide.

12. Procédé selon la revendication 11, dans lequel le signal est mis en oeuvre en dupliquant des paquets ACK par une fonction de couche IP vers une fonction de couche TCP.

13. Procédé selon l'une quelconque des revendications précédentes, dans lequel la communication entre le premier et le second élément de réseau est une communication sur la base du protocole IPv6 Mobile.

14. Système pour gérer une communication entre un premier élément de réseau et un second élément de réseau, dans lequel
la communication est effectuée via un réseau sur une base de paquet, et des messages d'accusé de réception accusant réception de paquets sont retournés à l'élément de réseau ayant envoyé ces paquets, comprenant
des moyens de contrôle d'encombrement pour effectuer un contrôle d'encombrement qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque le premier élément de réseau effectue un transfert intercellulaire et envoie un message informant le réseau ou un élément de réseau du transfert intercellulaire, les moyens de contrôle d'encombrement modifient le contrôle de l'encombrement pour fournir un taux de récupération plus rapide dudit nombre admissible après transfert intercellulaire par rapport au taux de récupération dudit nombre admissible après perte de paquet,
dans lequel les moyens de contrôle d'encombrement fournissent une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun message d'accusé de réception n'a été reçu de sorte que la taille de fenêtre est réduite en cas de perte de paquets pendant la transmission,
dans lequel, lorsque le premier élément de réseau effectue un transfert intercellulaire et envoie un message informant le réseau ou un élément de réseau du transfert intercellulaire, les moyens de contrôle d'encombrement sont adaptés pour modifier le contrôle de taille de fenêtre d'encombrement pour fournir un taux de récupération plus rapide de la taille de fenêtre après transfert intercellulaire par rapport au taux de récupération de la taille de fenêtre après perte de paquet,
dans lequel le taux de récupération plus rapide comprend une étape consistant à augmenter la taille de la fenêtre d'encombrement d'une manière progressive, dans lequel la taille de la fenêtre d'encombrement est augmentée de manière progressive jusqu'à au moins approximativement 50% de la taille de la valeur précédente de la fenêtre d'encombrement avant le début du transfert intercellulaire.

15. Système selon la revendication 14, dans lequel lesdits moyens de contrôle d'encombrement sont fournis dans au moins un des premier et second éléments de réseau.

16. Système selon l'une quelconque des revendications précédentes, dans lequel le premier élément de réseau est un noeud mobile qui, lorsqu'il passe d'un sous réseau vers un autre sous réseau étranger acquiert une adresse temporaire, et envoie ledit message à son réseau domestique informant ce dernier de l'adresse temporaire.

17. Système selon l'une quelconque des revendications précédentes, dans lequel ledit message est un message de "mise à jour de l'association".

18. Système selon l'une quelconque des revendications précédentes, dans lequel ledit second élément de réseau comprend un algorithme de retransmission rapide et de récupération rapide de manière à fournir ledit taux de récupération plus rapide, dans lequel lorsque le message est envoyé à partir du premier élément de réseau vers le second élément de réseau, le second élément de réseau, lorsqu'il reçoit le message, déclenche une demande d'exécution immédiate dudit algorithme de retransmission rapide et de récupération rapide.

19. Système selon l'une quelconque des revendications précédentes, dans lequel ledit premier élément de réseau comprend un algorithme de retransmission rapide et de récupération rapide, et est adapté pour déclencher, lorsqu'il génère ledit message, la demande d'exécution immédiate dudit algorithme de retransmission rapide et de récupération rapide.

20. Système selon l'une quelconque des revendications précédentes, dans lequel le taux de récupération plus rapide est mis en oeuvre en augmentant la taille de la fenêtre d'encombrement d'une manière progressive jusqu'à une valeur comprise dans une fourchette allant de plus qu'une taille de fenêtre minimum jusqu'à, et incluant la taille de la fenêtre avant transfert intercellulaire, et par augmentation linéaire ou exponentielle subséquente de la taille de fenêtre d'encombrement.

21. Système pour gérer une communication entre un premier élément de réseau et un second élément de réseau, dans lequel
la communication est effectuée via un réseau sur une base de paquet, et des messages d'accusé de réception accusant réception de paquets sont retournés à l'élément de réseau ayant envoyé ces paquets, comprenant
des moyens de contrôle d'encombrement pour effectuer un contrôle d'encombrement qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque le premier élément de réseau effectue un transfert intercellulaire et envoie un message informant le réseau ou un élément de réseau du transfert intercellulaire, les moyens de contrôle d'encombrement modifient le contrôle de l'encombrement pour fournir un taux de récupération plus rapide dudit nombre admissible après transfert intercellulaire par rapport au taux de récupération dudit nombre admissible après perte de paquet,
dans lequel les moyens de contrôle d'encombrement fournissent une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun message d'accusé de réception n'a été reçu de sorte que la taille de fenêtre est réduite en cas de perte de paquets pendant la transmission,
dans lequel, lorsque le premier élément de réseau effectue un transfert intercellulaire et envoie un message informant le réseau ou un élément de réseau du transfert intercellulaire, les moyens de contrôle d'encombrement sont adaptés pour modifier le contrôle de taille de fenêtre d'encombrement pour fournir un taux de récupération plus rapide de la taille de fenêtre après transfert intercellulaire par rapport au taux de récupération de la taille de fenêtre après perte de paquet, dans lequel le contrôle d'encombrement comprend l'augmentation de la taille de la fenêtre d'encombrement d'une manière exponentielle jusqu'à une valeur seuil et une augmentation linéaire subséquente de la taille de fenêtre d'encombrement, dans lequel le taux de récupération plus rapide est mis en oeuvre en établissant la valeur seuil à au moins la moitié de, et jusqu'à, la valeur précédente de la fenêtre d'encombrement avant le début du transfert intercellulaire.

22. Système selon l'une quelconque des revendications précédentes, dans lequel le second élément de réseau est un noeud correspondant.

23. Système selon l'une quelconque des revendications précédentes, dans lequel au moins un des premier et second éléments de réseau comprend des moyens de contrôle d'encombrement, et dans lequel lorsqu'il génère ou reçoit ledit message, le premier et/ou second élément de réseau informe ses moyens de contrôle d'encombrement qui en réponse déclenchent la demande d'exécution immédiate d'un algorithme de retransmission rapide et de récupération rapide.

24. Système selon l'une quelconque des revendications précédentes, dans lequel au moins un des premier et second éléments de réseau comprend des moyens de contrôle d'encombrement, dans lequel l'élément de réseau lorsqu'il génère ou reçoit ledit message, envoie un signal aux moyens de contrôle d'encombrement, le signal indiquant aux moyens de contrôle d'encombrement que le contrôle d'encombrement doit être modifié de manière à fournir ledit taux de récupération plus rapide.

25. Système selon la revendication 27, dans lequel le signal est mis en oeuvre en dupliquant des paquets ACK par une fonction de couche IP vers une fonction de couche TCP.

26. Système selon l'une quelconque des revendications précédentes, dans lequel la communication entre le premier et le second élément de réseau est une communication sur la base du protocole IPv6 Mobile.

27. Elément de réseau destiné à être utilisé dans un système pour gérer une communication entre des éléments de réseau de préférence tels que définis dans l'une quelconque des revendications 14 à 20,
dans lequel la communication est effectuée via un réseau sur une base de paquet, et des messages d'accusé de réception accusant réception de paquets sont retournés à l'élément de réseau ayant envoyé ces paquets, comprenant
des moyens de contrôle d'encombrement pour effectuer un contrôle d'encombrement qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque l'élément de réseau effectue un transfert intercellulaire et envoie un message informant le réseau ou un élément de réseau du transfert intercellulaire, les moyens de contrôle d'encombrement sont adaptés pour modifier le contrôle de l'encombrement pour fournir un taux de récupération plus rapide dudit nombre admissible après transfert intercellulaire par rapport au taux de récupération dudit nombre admissible après perte de paquet,
dans lequel les moyens de contrôle d'encombrement fournissent une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun message d'accusé de réception n'a été reçu de sorte que la taille de fenêtre est réduite en cas de perte de paquets pendant la transmission,
dans lequel, lorsque l'élément de réseau effectue un transfert intercellulaire et envoie un message informant le réseau ou un élément de réseau du transfert intercellulaire, les moyens de contrôle d'encombrement sont adaptés pour modifier le contrôle de taille de fenêtre d'encombrement pour fournir un taux de récupération plus rapide de la taille de fenêtre après transfert intercellulaire par rapport au taux de récupération de la taille de fenêtre après perte de paquet,
dans lequel la taille de la fenêtre d'encombrement est augmentée d'une manière progressive jusqu'à au moins approximativement 50% de la taille de la valeur précédente de la fenêtre d'encombrement avant le début du transfert intercellulaire.

28. Elément de réseau selon la revendication 27, dans lequel ledit élément de réseau comprend un algorithme de retransmission rapide et de récupération rapide de manière à fournir ledit taux de récupération plus rapide, et est adapté pour déclencher, lorsqu'il génère ledit message, la demande d'exécution immédiate dudit algorithme de retransmission rapide et de récupération rapide.

29. Elément de réseau destiné à être utilisé dans un système pour gérer une communication entre des éléments de réseau de préférence tels que définis dans l'une quelconque des revendications 21 à 26,
dans lequel la communication est effectuée via un réseau sur une base de paquet, et des messages d'accusé de réception accusant réception de paquets sont retournés à l'élément de réseau ayant envoyé ces paquets, comprenant
des moyens de contrôle d'encombrement pour effectuer un contrôle d'encombrement qui définit de façon variable un nombre admissible de paquets qui peuvent être envoyés avant la réception de messages d'accusé de réception pour ces paquets, dans lequel ledit nombre admissible de paquets est réduit en cas de perte de paquet pendant la transmission,
dans lequel, lorsque l'élément de réseau effectue un transfert intercellulaire et envoie un message informant le réseau ou un élément de réseau du transfert intercellulaire, les moyens de contrôle d'encombrement sont adaptés pour modifier le contrôle de l'encombrement pour fournir un taux de récupération plus rapide dudit nombre admissible après transfert intercellulaire par rapport au taux de récupération dudit nombre admissible après perte de paquet,
dans lequel les moyens de contrôle d'encombrement sont adaptés pour fournir une fenêtre d'encombrement de taille variable, la taille de la fenêtre d'encombrement définissant ledit nombre admissible de paquets qui peuvent être envoyés avant la réception de messages d'accusé de réception pour ces paquets, et la taille étant contrôlée en fonction du nombre de paquets envoyés pour lesquels aucun message d'accusé de réception n'a été reçu de sorte que la taille de fenêtre est réduite en cas de perte de paquets pendant la transmission,
dans lequel, lorsque l'élément de réseau effectue un transfert intercellulaire et envoie un message informant le réseau ou un élément de réseau du transfert intercellulaire, les moyens de contrôle d'encombrement sont adaptés pour modifier le contrôle de taille de fenêtre d'encombrement pour fournir un taux de récupération plus rapide de la taille de fenêtre après transfert intercellulaire par rapport au taux de récupération de la taille de fenêtre après perte de paquet, dans lequel le contrôle d'encombrement comprend l'augmentation de la taille de la fenêtre d'encombrement d'une manière exponentielle jusqu'à une valeur seuil et une augmentation linéaire subséquente de la taille de fenêtre d'encombrement, dans lequel le taux de récupération plus rapide est mis en oeuvre en établissant la valeur seuil à au moins la moitié de, et jusqu'à, la valeur précédente de la fenêtre d'encombrement avant le début du transfert intercellulaire.

30. Elément de réseau selon l'une quelconque des revendications d'élément de réseau précédentes, dans lequel l'élément de réseau comprend des moyens de contrôle d'encombrement, et dans lequel lorsqu'il génère ou reçoit ledit message, l'élément de réseau informe ses moyens de contrôle d'encombrement qui en réponse déclenchent la demande d'exécution immédiate d'un algorithme de retransmission rapide et de récupération rapide.

31. Elément de réseau selon l'une quelconque des revendications 27 à 30, dans lequel l'élément de réseau comprend des moyens de contrôle d'encombrement, dans lequel l'élément de réseau lorsqu'il génère ou reçoit ledit message, envoie un signal aux moyens de contrôle d'encombrement, le signal indiquant aux moyens de contrôle d'encombrement que le contrôle d'encombrement doit être modifié de manière à fournir ledit taux de récupération plus rapide.

32. Elément de réseau selon la revendication 31, dans lequel le signal est mis en oeuvre en dupliquant des paquets ACK par une fonction de couche IP vers une fonction de couche TCP.
